(19) Europäisches Patentamt / European Patent Office / Office européen des brevets

(11) **EP 4 368 759 A1**

(12) **EUROPEAN PATENT APPLICATION**
published in accordance with Art. 153(4) EPC

(43) Date of publication:
**15.05.2024 Bulletin 2024/20**

(21) Application number: **22837505.1**

(22) Date of filing: **24.06.2022**

(51) International Patent Classification (IPC):
**D04H 3/16** (2006.01)    **A41D 13/11** (2006.01)
**A62B 18/02** (2006.01)    **B01D 39/16** (2006.01)
**D04H 1/4374** (2012.01)    **D04H 1/4382** (2012.01)
**D04H 1/498** (2012.01)    **D04H 3/105** (2012.01)
**D04H 3/11** (2012.01)

(52) Cooperative Patent Classification (CPC):
**A41D 13/11; A62B 18/02; B01D 39/16;**
**D04H 1/4374; D04H 1/4382; D04H 1/498;**
**D04H 3/105; D04H 3/11; D04H 3/16**

(86) International application number:
**PCT/JP2022/025285**

(87) International publication number:
**WO 2023/282088 (12.01.2023 Gazette 2023/02)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **07.07.2021 JP 2021112950**
**07.07.2021 JP 2021112951**

(71) Applicant: **Kuraray Kuraflex Co., Ltd.**
**Okayama 702-8045 (JP)**

(72) Inventors:
• **SEKIYA, Shinji**
 **Okayama-shi, Okayama 702-8045 (JP)**
• **OBATA, Soichi**
 **Osaka-shi, Osaka 530-8611 (JP)**
• **OCHIAI, Toru**
 **Okayama-shi, Okayama 702-8045 (JP)**
• **YOSHIDA, Tsugumi**
 **Kurashiki-shi, Okayama 710-0801 (JP)**
• **OKAMOTO, Minoru**
 **Kurashiki-shi, Okayama 710-0801 (JP)**

(74) Representative: **Müller-Boré & Partner**
**Patentanwälte PartG mbB**
**Friedenheimer Brücke 21**
**80639 München (DE)**

(54) **FIBER STRUCTURE AND USE THEREOF**

(57) Provided is a fiber structure having a high dust holding capacity. The fiber structure includes a thick fiber group composed of fibers A each having a single fiber diameter larger than 5 $\mu$m and a thin fiber group composed of fibers B each having a single fiber diameter of 5 $\mu$m or smaller, and has an intermingled region in which the thick fiber group and the thin fiber group are intermingled.

Fig. 1

EP 4 368 759 A1

**Description**

CROSS REFERENCE TO THE RELATED APPLICATION

This application is based on and claims Convention priority to Japanese patent application No. 2021-112950, filed July 7, 2021 and Japanese patent application No. 2021-112951, filed July 7, 2021, the entire disclosures of which are herein incorporated by reference as a part of this application.

FIELD OF THE INVENTION

The present invention relates to a fiber structure having an intermingled region in which thick fibers and thin fibers are intermingled.

BACKGROUND OF THE INVENTION

Air filters have been conventionally used for removing dust such as pollen and airborne dust in a gaseous body. Nonwoven fabrics have often been used as filter materials of such air filters. Among the nonwoven fabrics, a nonwoven fabric made of thin fibers producible by melt-blowing or the like has a high capability of collecting dust in a gaseous body. However, the small single fiber finenesses of constituent fibers causes a high fiber density in the nonwoven fabric and thus has a problem to cause a high pressure loss.

In order to obtain a nonwoven fabric having a low pressure loss, thick fibers having large single fiber finesses are suitable for fibers composing the nonwoven fabric. However, the large single fiber finenesses of constituent fibers cause a reduced fiber surface area in the nonwoven fabric and thus has a problem due to a reduced filtration efficiency. Therefore, there is a discrepancy between having a high filtration efficiency and having a low pressure loss.

In order to solve such problems, there have been attempts to achieve a high filtration efficiency and a low pressure loss by using a fiber structure obtained by intermingling thick fibers and thin fibers.

For example, Patent Document 1 (WO2020/137605) discloses a fiber structure comprising an extra-fine fiber layer spreading in a plane direction, and a substrate layer adjoining the extra-fine fiber layer, wherein the extra-fine fiber layer comprises extra-fine fibers having a number average single fiber diameter of 5 $\mu$m or smaller; the substrate layer comprises non-extra-fine fibers having a number average single fiber diameter of 7 $\mu$m or larger; in a cross section along a thickness direction of the fiber structure, the substrate layer contains mixture portions in each of which some of the extra-fine fibers pushed between the non-extra-fine fibers are widened in a crosswise direction; and where the substrate layer is divided into three segments and each of the segments is denoted sequentially from the extra-fine fiber layer side as a proximal region, a central region, and a distal region, at least a part of the pushed extra-fine fibers from the extra-fine fiber layer reach the distal region.

In addition, Patent Document 2 (WO2021/010178) discloses a fiber structure comprising ultrafine fibers having a number average single fiber diameter of 4.5 $\mu$m or smaller and non-ultrafine fibers having a number average single fiber diameter of 5.5 $\mu$m or larger, wherein the ultrafine fibers and the non-ultrafine fibers are unitedly intermingled, and the fiber structure has projections on at least one surface thereof.

RELATED ART DOCUMENT

PATENT DOCUMENT

[Patent Document 1] WO2020/137605
[Patent Document 2] WO2021/010178

SUMMARY OF THE INVENTION

However, Patent Documents 1 and 2 reveal only evaluation on an initial filtration efficiency and an initial pressure loss, and neither of the documents describes any changes, in the performances, that occur over time when collection of dust is continued.

In order to use a fiber structure as an air filter for a long period, the fiber structure is required to have a high dust holding capacity indicating an amount of dust that it can be collected until the end of a lifespan at which the fiber structure becomes unusable as a filter. Regarding each of the fiber structures described in Patent Documents 1 and 2, there is a room for further enhancement of the dust holding capacity.

Therefore, an object of the present invention is to provide a fiber structure having a high dust holding capacity.

As a result of intensive research and studies to achieve the above object, the inventors of the present invention have found that a high dust holding capacity can be achieved with a fiber structure having an intermingled region in which a thick fiber group and a thin fiber group are intermingled, the fiber structure being such that: the filling proportions of thick fibers A and thin fibers B in a thickness direction are in a specific relationship; or an average number of fused points between thin fibers B composing the thin fiber group is within a specific range. Based on these findings, the inventors have completed the present invention.

That is, the present invention may include the following aspects.

Aspect 1

A fiber structure comprising a thick fiber group composed of fibers A each having a single fiber diameter larger than 5 $\mu$m and a thin fiber group composed of fibers B each having a single fiber diameter of 5 $\mu$m or smaller, and

the fiber structure having an intermingled region in which the thick fiber group and the thin fiber group are intermingled, wherein

where the fiber structure is equally divided into ten regions in a thickness direction thereof; the regions are defined as first to tenth regions from the thin fiber group side to the thick fiber group side; and the first to third regions, the fourth to seventh regions, and the eighth to tenth regions are defined as regions S, T, and U, respectively,

the fiber structure satisfies

the condition that SB is the highest among SB, TB, and UB, and

the expression of TA + TB > SA + SB > UA + UB,

in which SA, TA, and UA represent filling proportions of the fibers A existing in the regions S, T, and U, respectively, and SB, TB, and UB represent filling proportions of the fibers B existing in the regions S, T, and U, respectively.

Aspect 2

The fiber structure according to aspect 1, wherein an average number of fused points between the fibers B is 10 or smaller (preferably 8 or smaller, and more preferably 5 or smaller) in a 100 $\mu$m-square range spreading in a planar direction of the fiber structure.

Aspect 3

The fiber structure according to aspect 2, wherein the fused points between the fibers B are derived from melt-blowing.

Aspect 4

A fiber structure comprising a thick fiber group composed of fibers A each having a single fiber diameter larger than 5 $\mu$m and a thin fiber group composed of fibers B each having a single fiber diameter of 5 $\mu$m or smaller, and

the fiber structure having an intermingled region in which the thick fiber group and the thin fiber group are intermingled, wherein an average number of fused points between the fibers B is 1.0 or larger and 10.0 or smaller (preferably 1.0 or larger and 8.0 or smaller, and more preferably 1.0 or larger and 5.0 or smaller) in a 100 $\mu$m-square range spreading in a planar direction of the fiber structure.

Aspect 5

The fiber structure according to aspect 4, wherein the fused points between the fibers B are derived from melt-blowing.

Aspect 6

The fiber structure according to aspect 4 or 5, wherein

where the fiber structure is equally divided into ten regions in a thickness direction thereof; the regions are defined as first to tenth regions from the thin fiber group side to the thick fiber group side; and the first to third regions, the fourth to seventh regions, and the eighth to tenth regions are defined as regions S, T, and U, respectively,

the fiber structure satisfies

the condition that SB is the highest among SB, TB, and UB, and

the expression of TA + TB > SA + SB > UA + UB,

in which SA, TA, and UA represent filling proportions of the fibers A existing in the regions S, T, and U, respectively, and SB, TB, and UB represent filling proportions of the fibers B existing in the regions S, T, and U, respectively.

Aspect 7

The fiber structure according to any one of aspects 1 to 6, wherein the fiber structure is an entangled product of a thick fiber nonwoven fabric comprising the fibers A and a thin fiber nonwoven fabric comprising the fibers B.

Aspect 8

The fiber structure according to any one of aspects 1 to 7, wherein the thick fiber group has a number-average single fiber diameter of 5.5 $\mu$m or larger (preferably 6.0 $\mu$m or larger, and more preferably 7.0 $\mu$m or larger), and the thin fiber group has a number-average single fiber diameter of 4.5 $\mu$m or smaller (preferably 4.0 $\mu$m or smaller, and more preferably 3.0 $\mu$m or smaller).

Aspect 9

The fiber structure according to any one of aspects 1 to 8, wherein the fiber structure has a basis weight of from 15 to 180 g/m$^2$ (preferably from 18 to 150 g/m$^2$, and more preferably from 20 to 120 g/m$^2$).

Aspect 10

The fiber structure according to any one of aspects 1 to 9, wherein the fiber structure is electrically charged.

Aspect 11

The fiber structure according to any one of aspects 1 to 10, wherein the fiber structure has a filtration efficiency (collection efficiency) of 60% or higher (preferably 70% or higher, and more preferably 80% or higher).

Aspect 12

The fiber structure according to any one of aspects 1 to 11, wherein the fiber structure has a QF value of 0.10 or larger (preferably 0.15 or larger, and more preferably 0.19 or larger), the QF value being calculated from a filtration efficiency and a pressure loss according to the following formula:

$$\text{QF value} = -\ln(1 - \text{collection efficiency (\%) / 100}) \text{ / pressure loss (Pa)}.$$

Aspect 13

A filter comprising the fiber structure as recited in any one of aspects 1 to 12.

Aspect 14

A mask comprising the filter as recited in aspect 13.

Any combination of at least two features disclosed in the claims and/or the specification and/or the drawings should be construed as included within the scope of the present invention. In particular, any combination of two or more of the appended claims should be equally construed as included within the scope of the present invention.

The fiber structure of the present invention can have a high dust holding capacity, and thus, can collect dust for a long period.

BRIEF DESCRIPTION OF THE DRAWINGS

The present invention will be more clearly understood from the following description of preferred embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims. The drawings are not necessarily shown at a consistent scale and may be exaggerated in order to illustrate the principle according to the present invention. In the figures,

Fig. 1 is an enlarged image showing a cross section of a fiber structure in Example 4;
Fig. 2 is an enlarged image showing a surface on a thin fiber group side of the fiber structure in Example 4; and
Fig. 3 is a schematic cross-sectional view for illustrating each region of a fiber structure according to one embodiment of the present invention.

DESCRIPTION OF THE EMBODIMENTS

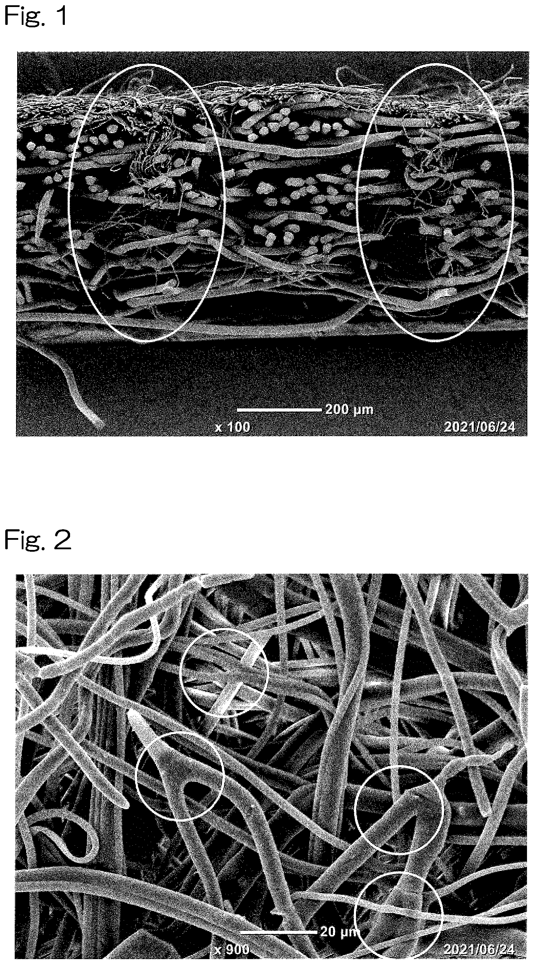

A fiber structure of the present invention includes a thick fiber group composed of fibers A (hereinafter, sometimes referred to as thick fibers A) having a single fiber diameter larger than 5 $\mu$m and a thin fiber group composed of fibers B (hereinafter, sometimes referred to as thin fibers B) having a single fiber diameter of 5 $\mu$m or smaller, and has an intermingled region in which the thick fiber group and the thin fiber group are intermingled. As used herein, the intermingled region means a region having a structure in which some of the thin fibers B composing the thin fiber group enter the thick fiber group as indicated by oval frames in Fig. 1. Such a structure can be obtained by performing an entangling process described later. The fiber structure of the present invention has, in at least a portion thereof, the intermingled region of the thick fiber group and the thin fiber group and differs from a layered body in which the thick fiber group and the thin fiber group are merely overlaid on each other as layers. For example, the fiber structure of the present invention may have the thick fiber group and the thin fiber group, which are formed as layers, and have the intermingled region at only around the interface between both layers. Alternatively, the fiber structure may have the thick fiber group and the thin fiber group, which are not formed as layers separated from each other, and have the intermingled region over the entirety in a thickness direction of the fiber structure. The single fiber diameter means the diameter of individual single fibers. Individual single fibers can be classified into the thick fibers A and the thin fibers B by using the single fiber diameter as an index in accordance with the method described in Examples later.

In the present invention, the fiber structure is equally divided into ten regions in the thickness direction thereof, the regions are defined as first to tenth regions from the thin fiber group side to the thick fiber group side, and the first to third regions, the fourth to seventh regions, and the eighth to tenth regions are defined as regions S, T, and U, respectively. As used herein, the thin fiber group side means the side on which, of two regions obtained by equally dividing the fiber structure in the thickness direction, there is a region in which a filling proportion of the thin fibers B is higher than that in the other region with focus being placed on a distribution of the thin fibers B. Meanwhile, the thick fiber group side means the side opposite to the thin fiber group side.

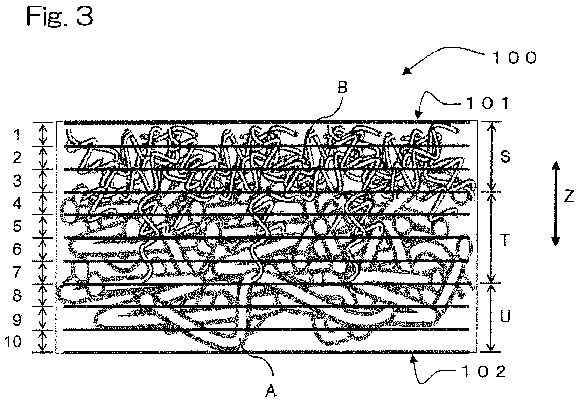

Fig. 3 is a schematic cross-sectional view for illustrating each region of a fiber structure according to one embodiment. In Fig. 3, of two regions obtained by equally dividing a fiber structure 100 in a thickness direction Z, a filling proportion of the thin fibers B is higher in a region on an upper side (first to fifth regions) than in a region on a lower side (sixth to tenth regions). Thus, the upper side of the fiber structure 100 is defined as a thin fiber group side 101, and the lower side of the fiber structure 100 is defined as a thick fiber group side 102. The fiber structure 100 is divided into regions which are defined as the first region, the second region, ..., and the tenth region in this order from the upper side. As shown in Fig. 3, the first to third regions correspond to a region S, the fourth to seventh regions correspond to a region T, and the eighth to tenth regions correspond to a region U.

In the present invention, a filling proportion of the thick fibers A existing in each $n^{th}$ region (n=1 to 10) is defined as $M_nA$, a filling proportion of the thin fibers B existing in each $n^{th}$ region (n=1 to 10) is defined as $M_nB$, a filling proportion of the thick fibers A existing in all the first to tenth regions is defined as MA, a filling proportion of the thin fibers B existing in all the first to tenth regions is defined as MB, filling proportions of the thick fibers A existing in the region S, the region T, and the region U are defined as SA, TA, and UA, respectively, and filling proportions of the thin fibers B existing in the region S, the region T, and the region U are defined as SB, TB, and UB, respectively. In the present invention, the filling proportion means the proportion of the volume occupied by target fibers in a predetermined region to the volume of the region, and is a value measured in accordance with the method described in Examples later.

For example, $M_1A$ indicates the proportion of the volume occupied by the thick fibers A in the first region to the volume of the first region. $M_{2-3}A$ indicates the proportion of the volume occupied by the thick fibers A in the second region and the third region to the total volume of the second region and the third region, and is equal to the average value of $M_2A$ and $M_3A$. SA indicates the proportion of the volume occupied by the thick fibers A in the region S (i.e., the first to third regions) to the total volume of the region S, and is equal to the average value of $M_1A$, $M_2A$, and $M_3A$.

The fiber structure of the present invention satisfies: the condition that SB is the highest among SB, TB, and UB; and the expression of TA + TB > SA + SB > UA + UB. In the case where such a fiber structure is used as a filter, the region U side thereof can be used as the upstream side during collection. In this case, air flows in from the region U, passes through the region U, the region T, and the region S in this order, and flows out from the region S. That is, such a fiber structure has a structure in which: the filling proportion of the fibers (the thick fibers A and the thin fibers B) is low in the region U on the upstream side; the filling proportion of the fibers (the thick fibers A and the thin fibers B, and in particular, the thick fibers A) is high in the intermediate region T; and the filling proportion of the thin fibers B is high in the region S on the downstream side. Dust in a gaseous body is a mixture of particulate matter having various particle diameters. For the dust, the fiber structure having such a specific fiber distribution acts as follows. First, since the region U has a coarse structure with a small amount of fibers, the region U can collect dust having large particle diameters without being clogged. Then, since the region T has a finer structure than the region U due to a high filling proportion of the fibers (in particular, the thick fibers A), the region T can collect the remainder of the dust having the large particle diameters, and furthermore, can gradually collect dust having small particle diameters. Lastly, since the region S has an even denser structure than the region T due to the largest amount of thin fibers B, the region S can collect the dust having the small particle diameters. In this manner, the above fiber structure has a vacancy-gradient structure that enables gradual collection of dust such that the particle diameter of the collected dust decreases from the upstream side to the downstream side. Consequently, the fiber structure is less likely to have a high pressure loss due to clogging and can achieve a high dust holding capacity.

In the fiber structure of the present invention, the filling proportion of the fibers in the region U is preferably low from the viewpoint of preventing clogging on the upstream side. For example, UA + UB may be 10.0% or lower, preferably 8.0% or lower, and more preferably 5.0% or lower. The lower limit of UA + UB is not particularly limited to a specific one, and UA + UB may be, for example, 0.1% or higher and preferably 0.5% or higher from the viewpoint of enabling dust having large particle diameters to be collected to some extent.

In the fiber structure of the present invention, the filling proportion (TA + TB) of the fibers in the region T may be from 6.0 to 30.0%, preferably from 6.2 to 25.0%, and more preferably from 6.5 to 20.0% from the viewpoint of improving the filtration efficiency while preventing clogging in the intermediate region.

In the fiber structure of the present invention, the filling proportion of the thin fibers B in the region S is preferably high from the viewpoint of improving the filtration efficiency for dust having small particle diameters on the downstream side. For example, $M_nB$ which is the highest among $M_1B$, $M_2B$, and $M_3B$ may be 5.0% or higher, preferably 5.5% or higher, and more preferably 6.0% or higher. The upper limit of $M_nB$ which is the highest among $M_1B$, $M_2B$, and $M_3B$ is not particularly limited to a specific one, and $M_nB$ may be, for example, 25.0% or lower, preferably 18.0% or lower, and more preferably 15.0% or lower from the viewpoint of reducing the pressure loss.

In the fiber structure of the present invention, SB + UA may be from 1.0 to 12.0%, preferably from 2.0 to 11.5%, and more preferably from 2.5 to 11.0% from the viewpoint of improving the dust holding capacity.

The fiber structure of the present invention preferably has the intermingled region with the thick fibers A existing in the region S on the thin fiber group side, and for example, $M_{2-3}A$ may be from 0.05 to 20.0%, preferably from 0.08 to 15.0%, and more preferably from 0.10 to 10.0%.

In the fiber structure of the present invention, the intermingled region may be regarded as a region in which both the thick fibers A and the thin fibers B exist among the first to tenth regions, and for example, the ratio $M_nA / M_nB$ of the filling proportion of the thick fibers A existing in an $n^{th}$ region to the filling proportion of the thin fibers B existing in the $n^{th}$ region may be from 0.1 to 200 in the intermingled region. In addition, the intermingled region of the fiber structure of the present invention is preferably wide in the thickness direction. For example, $M_nA / M_nB$ in at least two (preferably at least three and more preferably at least four) adjacent regions among the first to tenth regions may be preferably from 0.2 to 100, more preferably from 0.5 to 80, and further preferably from 1 to 70.

In the fiber structure of the present invention, the filling proportion MA + MB of the fibers in all the first to tenth regions may be from 1.0 to 20.0%, preferably from 3.0 to 18.0%, and more preferably from 5.0 to 15.0% from the viewpoint of achieving both a high filtration efficiency and a low pressure loss.

In the fiber structure of the present invention, the ratio MA / MB of the filling proportion of the thick fibers A in all the first to tenth regions to the filling proportion of the thin fibers B in all the first to tenth regions may be from 0.5 to 10, preferably from 0.8 to 8, more preferably from 1.10 to 6, and further preferably from 2.25 to 5.

In the fiber structure of the present invention, an average number of fused points between the thin fibers B may be 1.0 or larger and 10.0 or smaller in a 100 μm-square range spreading in a planar direction of the fiber structure. As used herein, the term "fused" means a state where at least a part of the fibers is melted, so that the fibers are adhered. The number of fused points between the thin fibers B in a 100 μm-square range spreading in the planar direction of the fiber structure means the number of portions at which thin fibers B observable in a planar enlarged image, of a 100 μm-square range spreading in the planar direction of the fiber structure using a microscope, are fused to each other at intersections therebetween as indicated by round frames in Fig. 2. The average number of fused points means an average value of the number of fused points in five 100 μm-square ranges different from one another in the planar direction of the fiber structure, and is a value measured in accordance with the method described in Examples later. Since the number of fused points means the number of fused points observable in an enlarged image, the 100 μm-square ranges include not only a 100 μm-square surface spreading in the planar direction of the fiber structure but also a range in the thickness direction at the surface displayed in the enlarged image.

In the fiber structure having the small average number of fused points between the thin fibers B, the thin fiber group is hardly fixed by fusion and is mechanically intermingled. Thus, the degree of freedom of movement of the thin fiber group is increased, and the thin fibers B are easily movable. As a result, the thin fiber group is easily entangled with the thick fiber group during entanglement described later. However, in the case where the average number of fused points between the thin fibers B is too small, the degree of freedom of movement of the thin fiber group is excessively increased. As a result, it is difficult to entangle the thin fiber group with the thick fiber group, probably because the thin fiber group is moved away and separated during entanglement. In this manner, the average number of fused points between the thin fibers B influences the relationship between the thin fiber group and the thick fiber group, and this fact is considered to be the reason for the following accomplishment. That is, the fiber structure in which the average number of fused points between the thin fibers B is within the specific range has a state where the thin fiber group and the thick fiber group are easily intermingled. Therefore, it is considered to be possible to form a structure in which, while the thin fibers B remain on the thin fiber group side, many of the fibers are distributed in an intermediate region in the thickness direction, resulting in the high dust holding capacity. The average number of fused points between the thin fibers B may be preferably 8.0 or smaller and more preferably 5.0 or smaller.

The fused points between the thin fibers B may be derived from fusing through melt-blowing. As described later, melt-blowing is preferable because of capability thereof to make fibers thin, and is a process for manufacturing a nonwoven fabric by utilizing self-fusing properties of fibers. From the viewpoint of improving the degree of freedom of the fibers with respect to air flow, the average number of fused points between the thin fibers B generated through melt-blowing is preferably within the specific range.

The fiber structure of the present invention may be an entangled product of a thick fiber nonwoven fabric (preferably a melt-blown nonwoven fabric or a spunlace nonwoven fabric) including the thick fibers A and a thin fiber nonwoven fabric (preferably a melt-blown nonwoven fabric) including the thin fibers B.

In the fiber structure of the present invention, the thin fibers B may be long fibers or short fibers, and may have a fiber length of 15 mm or longer, preferably 20 mm or longer, more preferably 30 mm or longer, and further preferably 35 mm or longer. In the present invention, the long fibers refer to fibers forming a long fiber nonwoven fabric (for example, a melt-blown nonwoven fabric or a spun-bonded nonwoven fabric) and can be distinguished from short fibers which are comparatively uniform in fiber length by being cut into predetermined fiber lengths.

The fiber structure may have a basis weight which is suitably set depending on the intended use and may be, for example, from about 15 to 180 g/m$^2$, preferably from about 18 to 150 g/m$^2$, and more preferably from about 20 to 120 g/m$^2$. The basis weight is a value measured in accordance with the method described in Examples later.

From the viewpoint of achieving both a high filtration efficiency and a low pressure loss, the fiber structure may have an apparent density of, for example, from about 0.005 to 0.30 g/cm$^3$ (for example, from 0.005 to 0.10 g/cm$^3$), preferably from about 0.01 to 0.20 g/cm$^3$ (for example, from 0.01 to 0.08 g/cm$^3$), and more preferably from about 0.02 to 0.15 g/cm$^3$ (for example, from 0.02 to 0.07 g/cm$^3$). The apparent density is a value measured in accordance with the method described in Examples later.

The fiber structure may have a thickness which is suitably set depending on the intended use and may be, for example, from about 0.1 to 5 mm, preferably from about 0.2 to 3 mm, and more preferably from about 0.3 to 1 mm. The thickness is a value measured in accordance with the method described in Examples later.

The thick fibers A mean all fibers each having a single fiber diameter larger than 5.0 μm in the fiber structure, and an aggregate of the thick fibers A is a thick fiber group. From the viewpoint of reducing the pressure loss, the thick fiber group may have a number-average single fiber diameter of 5.5 μm or larger, preferably 6.0 μm or larger, and more preferably 7.0 μm or larger. The upper limit value of the number-average single fiber diameter of the thick fiber group is not particularly limited to a specific one, and the number-average single fiber diameter may be 50 μm or smaller and preferably 30 μm or smaller from the viewpoint of optimizing the capability of entanglement with the thin fiber group. The number-average single fiber diameter is a value measured in accordance with the method described in Examples later.

The thin fibers B mean all fibers each having a single fiber diameter of 5.0 μm or smaller in the fiber structure, and an aggregate of the thin fibers B is the thin fiber group. From the viewpoint of improving the filtration efficiency, the thin fiber group may have a number-average single fiber diameter of 4.5 μm or smaller, preferably 4.0 μm or smaller, and more preferably 3.0 μm or smaller. The lower limit value of the number-average single fiber diameter of the thin fiber group is not particularly limited to a specific one, and the number-average single fiber diameter may be 0.1 μm or larger and preferably 0.5 μm or larger from the viewpoint of handleability.

From the viewpoint of optimization of intermingling between the thick fiber group and the thin fiber group, the ratio of the number-average single fiber diameter of the thin fiber group to the number-average single fiber diameter of the thick fiber group, expressed as (thin fiber group) / (thick fiber group), may be, for example, from 0.05 to 0.80, preferably from 0.08 to 0.50, and more preferably from 0.10 to 0.35.

The thick fibers A composing the thick fiber group can be selected according to the intended use, and any of natural fibers, regenerated fibers, semi-synthetic fibers, and synthetic fibers can be used. More specifically, examples of the thick fibers A may include: natural fibers such as cotton, hemp, wool, and pulp; regenerated fibers such as rayon, polynosic, and cupra; semi-synthetic fibers such as acetate fibers and triacetate fibers; and synthetic fibers such as polyolefin-based fibers containing a polyolefin-based resin such as polyethylene and polypropylene, polystyrene-based fibers containing a polystyrene-based resin such as polystyrene, polyester-based fibers containing a polyester-based resin such as polyethylene terephthalate, polybutylene terephthalate, polytrimethylene terephthalate, and polylactic acid, polyamide-based fibers containing a polyamide-based resin such as polyamide 6, polyamide 66, polyamide 11, polyamide 12, polyamide 610, and polyamide 612, polycarbonate-based fibers containing a polycarbonate-based resin, polyurethane-based fibers containing a polyurethane-based resin, acrylic-based fibers containing an acrylic-based resin such as polyacrylonitrile, and various heat-resistant fibers. These fibers may be used singly or in combination of two or more.

The thick fibers A may be non-composite fibers or composite fibers (core-sheath composite fibers, sea-island composite fibers, side-by-side composite fibers, or the like). In the case of composite fibers, the composite fibers preferably contain, for example, a low melting point resin as one component (for example, a sheath component, a sea component, or the like) and a high melting point resin as the other component (for example, a core component, an island component, or the like). The low melting point resin and the high melting point resin can be selected as appropriate from the resins for forming the fibers described above and the like depending on the treatment temperature for thermal bonding.

Among these fibers, polyolefin-based fibers, polyester-based fibers, acrylic-based fibers, heat-resistant fibers, and composite fibers containing these resins thereof are preferably used.

The heat-resistant fibers may be fibers containing a heat-resistant polymer that has a unit having an aromatic structure, a heterocyclic structure, a sulfur-containing structure, a nitrogen-containing structure, or another structure in the molecule of the polymer. Examples of the heat-resistant fibers may include polyether ether ketone (PEEK) fibers, polyether ketone (PEK) fibers, polyether ketone ketone (PEKK) fibers, polyphenylene sulfide (PPS) fibers, aromatic polyamide fibers (for example, polyamide fibers containing an aliphatic diamine unit and an aromatic dicarboxylic acid unit), aramid fibers (para-aramid fibers and meta-aramid fibers), polyimide (PI) fibers, polyetherimide (PEI) fibers, polyamide-imide fibers, amorphous polyarylate fibers, liquid crystalline polyester fibers, polybenzoxazole (PBO) fibers, polybenzimidazole (PBI) fibers, polybenzothiazole fibers, polytetrafluoroethylene (PTFE) fibers, melamine fibers, novoloid fibers, and the like. These fibers may be used singly or in combination of two or more.

Among these heat-resistant fibers, liquid crystalline polyester fibers, polyetherimide fibers, polyphenylene sulfide fibers, semi-aromatic polyamide fibers (for example, semi-aromatic polyamide fibers including a terephthalic acid unit as a dicarboxylic acid unit and a 1,9-nonanediamine unit and/or a 2-methyl-1,8-octanediamine unit as a diamine unit), and the like are preferably used from the viewpoint of melt-spinnability and heat resistance.

The thin fibers B composing the thin fiber group can be selected as appropriate according to the manufacturing process, and synthetic fibers are preferably used. Examples of synthetic fiber-formable resins include polyolefin-based resins, polystyrene-based resins, acrylic-based resins, polyvinyl alcohol-based resins, polyvinyl chloride-based resins, polyvinylidene chloride-based resins, polyurethane-based resins, polyester-based resins, polyether-based resins, polyamide-based resins, heat-resistant resins constituting the heat-resistant fibers used for the thick fiber group described above, thermoplastic elastomers, and others. These resins may be used singly or in combination of two or more. The thin fibers B may be fibers formed of the same type of resin as that forming the thick fibers A or may be fibers formed of a different type of resin from that forming the thick fibers A. In addition, the thin fibers B may be preferably hydrophobic fibers from the viewpoint of filtration performance. Furthermore, both the thick fibers A and the thin fibers B may be preferably hydrophobic fibers.

As the resins constituting the heat-resistant fibers for forming a melt-blown nonwoven fabric, resins such as a liquid crystalline polyester, a polyetherimide, a polyphenylene sulfide, and a semi-aromatic polyamide (for example, a semi-aromatic polyamide including a terephthalic acid unit as a dicarboxylic acid unit and a 1,9-nonanediamine unit and/or a 2-methyl-1,8-octanediamine unit as a diamine unit) are preferably used, from the viewpoint of melt-spinnability and heat resistance.

A method of manufacturing the fiber structure of the present invention, for example, may at least includes: a step of preparing a layered body of a thick fiber nonwoven fabric and a thin fiber nonwoven fabric; and a step of subjecting the layered body to entangling process.

In the preparing step, a layered body of a thick fiber nonwoven fabric and a thin fiber nonwoven fabric is prepared. The thick fiber nonwoven fabric and the thin fiber nonwoven fabric both constituting the layered body may be separately prepared and be overlaid on each other to give the layered body. Alternatively, using one of the nonwoven fabrics (for example, the thick fiber nonwoven fabric) as a support or the like, the other nonwoven fabric (for example, the thin fiber nonwoven fabric) may be directly formed thereon in a deposited manner by melt-blowing or the like to give the layered body. From the viewpoint of widening the selection of raw materials, it is preferable to separately prepare the thick fiber nonwoven fabric and the thin fiber nonwoven fabric and to overlay them on each other to give the layered body. The layered body is preferably in a state (adhesive-free state) where the thick fiber nonwoven fabric and the thin fiber nonwoven fabric are simply overlaid on each other without being bonded, from the viewpoint of sufficiently entangling both nonwoven fabrics with each other in a subsequent entangling step. In this case, the obtained fiber structure is preferably such that the thick fibers constituting the thick fiber nonwoven fabric and the thin fibers constituting the thin fiber nonwoven fabric have not been fused to each other.

The thick fiber nonwoven fabric before entanglement may have a number-average single fiber diameter of 5.5 $\mu$m or larger, preferably 6.0 $\mu$m or larger, and more preferably 7.0 $\mu$m or larger. The upper limit value of the number-average single fiber diameter is not particularly limited to a specific one, and the number-average single fiber diameter may be, for example, 50 $\mu$m or smaller and preferably 30 $\mu$m or smaller. The thick fiber nonwoven fabric may include thick fibers A having a single fiber diameter larger than 5.0 $\mu$m as a main component (for example, 60% by weight or more). The type of the thick fiber nonwoven fabric is not particularly limited to a specific one as long as the thick fibers A in the thick fiber nonwoven fabric can be intermingled with the thin fibers B in the thin fiber nonwoven fabric, and may be preferably a dry-laid nonwoven fabric, a direct-spun nonwoven fabric (for example, a melt-blown nonwoven fabric or a spun-bonded nonwoven fabric), or the like. These thick fiber nonwoven fabrics may be used singly or in combination of two or more.

For example, in order to produce a dry-laid nonwoven fabric, a web is formed of a predetermined fiber aggregate by carding or air-laying. Thus-obtained web is subjected to bonding process for bonding fibers in order to impart a practical strength. As the bonding process, chemical bonding (for example, chemical bonding method), thermal bonding (for example, thermal bonding method and steam jetting method), or mechanical bonding (for example, spunlacing method and needle punching method) can be employed, and from the viewpoint of convenience, spunlacing method that involves entanglement by a hydroentangling process is preferably employed.

More specifically, examples of the dry-laid nonwoven fabric may include chemical-bonded nonwoven fabrics, thermal-bonded nonwoven fabrics, spunlace nonwoven fabrics, steam jet nonwoven fabrics, needle-punched nonwoven fabrics, air-laid nonwoven fabrics, and the like. Among these dry-laid nonwoven fabrics, spunlace nonwoven fabrics are preferable from the viewpoint of sufficient entanglement with the thin fiber nonwoven fabric.

Fibers constituting the dry-laid nonwoven fabric may have a fiber length of from about 15 to 70 mm, preferably from about 20 to 65 mm, more preferably from about 30 to 60 mm, and further preferably from about 35 to 55 mm. Such a fiber length enables the dry-laid nonwoven fabric to be distinguished from a wet-laid nonwoven fabric (ordinarily having a fiber length of 10 mm or shorter).

Examples of the direct-spun nonwoven fabric may include melt-blown nonwoven fabrics and spun-bonded nonwoven fabrics. Of these direct-spun nonwoven fabrics, melt-blown nonwoven fabrics are preferable because the melt-blown nonwoven fabrics can be adjusted to have a rigidity even with a low basis weight. The melt-blown nonwoven fabrics are nonwoven fabrics obtained by melt-blowing. In general, melt-blowing leads to a nonwoven fabric that constituent fibers have a low fineness. However, under a specific manufacturing condition, melt-blowing can form a nonwoven fabric that constituent fibers have a high fineness. In the case where a melt-blown nonwoven fabric is used as the thick fiber nonwoven fabric, the melt-blown nonwoven fabric has a high rigidity, and can improve entanglement with the thin fiber nonwoven fabric. In order to impart a rigidity to the thick fiber group so as to make it easy for the thin fiber group to be intermingled with the thick fiber group, it is preferable to collect the fibers on the collecting surface under the condition where the fibers in a fiber stream generated in melt-blowing are still thick (before they become finer) while the fibers are not solidified yet For example, it is preferable to shorten a collection distance for the fiber stream generated in melt-blowing, or to increase the viscosity of the resin or the like to make a fiber diameter larger so as to extend a time before solidifying the fibers. Specifically, the collection distance (i.e., the distance from a nozzle to the collecting surface) may be in a range from 3 to 100 cm, preferably from 5 to 80 cm, and more preferably from 7 to 60 cm.

The fibers constituting the thick fiber nonwoven fabric may be long fibers from the viewpoint of improvement in the rigidity and sufficient entanglement with the thin fiber nonwoven fabric.

The thick fiber nonwoven fabric may have a basis weight of, for example, from about 10 to 150 g/m$^2$, preferably from about 12 to 130 g/m$^2$, and more preferably from about 15 to 100 g/m$^2$.

From the viewpoint of sufficient entanglement with the thin fiber nonwoven fabric, the thick fiber nonwoven fabric preferably has a comparatively coarse structure, and may have an apparent density of, for example, from about 0.005 to 0.20 g/cm$^3$ (for example, from 0.005 to 0.07 g/cm$^3$), preferably from about 0.01 to 0.15 g/cm$^3$ (for example, from 0.01 to 0.06 g/cm$^3$), and more preferably from about 0.02 to 0.10 g/cm$^3$ (for example, from 0.02 to 0.05 g/cm$^3$).

The thick fiber nonwoven fabric may have a thickness of, for example, from about 0.1 to 5 mm, preferably from about 0.2 to 3 mm, and more preferably from about 0.3 to 1 mm.

The thin fiber nonwoven fabric before entanglement may have a number-average single fiber diameter of 4.5 $\mu$m or smaller, preferably 4.0 $\mu$m or smaller, and more preferably 3.0 $\mu$m or smaller. The lower limit value of the number-average single fiber diameter is not particularly limited to a specific one, and the number-average single fiber diameter may be, for example, 0.1 $\mu$m or larger and preferably 0.5 $\mu$m or larger. The thin fiber nonwoven fabric may include thin fibers B having a single fiber diameter of 5.0 $\mu$m or smaller as a main component (for example, 60% by weight or more).

As the thin fiber nonwoven fabric, it is possible to use: a melt-blown nonwoven fabric; an electrospun nonwoven fabric; a nonwoven fabric formed of split fibers (a thin fiber nonwoven fabric obtained from a nonwoven fabric formed of bundle of fibers of different components by splitting the fibers at interface of the different components); a nonwoven fabric formed of sea-island fibers (a thin fiber nonwoven fabric obtained from a nonwoven fabric formed of sea-island fibers by eluting the sea component); a nonwoven fabric formed of fibrillated fibers (a thin fiber nonwoven fabric obtained from a nonwoven fabric by applying a physical impact to make the fibers to be fibrillated); or the like. From the viewpoint of ease of intermingling, a melt-blown nonwoven fabric may be preferably used.

In order to obtain the fiber structure of the present invention, a thin fiber nonwoven fabric in which the average number of fused points between the thin fibers B is within the specific range is preferably used. Use of such a thin fiber nonwoven fabric makes it possible to facilitate intermingling between the thin fiber group and the thick fiber group by an entangling process with the thick fiber nonwoven fabric. For example, the melt-blown nonwoven fabric can be formed by jetting hot air to a molten thermoplastic polymer extruded from a nozzle so as to thin the extruded thermoplastic polymer into a fiber shape while intermingling the fibers with each other and causing self-fusion of the fibers at the same moment in a high-temperature and high-speed air stream. In the present invention, it has been found that adjustment of the collection distance for a fiber stream generated in melt-blowing makes it possible to control self-fusing properties exhibited during a period from a time at which the extruded polymer is made into fibers to a time at which the fibers reach the collecting surface, whereby the average number of fused points between the thin fibers B of the obtained thin fiber nonwoven fabric can be adjusted. Specifically, lengthening of the collection distance makes it possible to suppress self-fusion, whereas shortening of the collection distance makes it possible to promote self-fusion. Considering this, the collection distance (i.e., the distance from the nozzle to the collecting surface), which is also dependent on conditions such as the viscosity of the resin and the air temperature, may be from 35 to 90 cm, preferably from 40 to 80 cm, and more preferably from 40 to 70 cm.

The thin fiber nonwoven fabric may have a basis weight of, for example, from about 1.0 to 30 $g/m^2$, preferably from about 2.0 to 25 $g/m^2$, and more preferably from about 3.0 to 20 $g/m^2$ from the viewpoint of sufficient entanglement with the thick fiber nonwoven fabric.

The thin fiber nonwoven fabric may have an apparent density of, for example, from about 0.01 to 0.30 $g/cm^3$, preferably from about 0.03 to 0.25 $g/cm^3$, and more preferably from about 0.05 to 0.20 $g/cm^3$.

The thin fiber nonwoven fabric may have a thickness of, for example, from about 0.01 to 0.30 mm, preferably from about 0.03 to 0.25 mm, and more preferably from about 0.05 to 0.20 mm.

In the layered body, the ratio W1/W2 of the basis weight W1 of the thick fiber nonwoven fabric to the basis weight W2 of the thin fiber nonwoven fabric may be from 1.2 to 8.0, preferably from 1.3 to 5.0, more preferably from 1.5 to 3.5, and further preferably from 1.7 to 2.5 from the viewpoint of sufficient entanglement between the thick fiber nonwoven fabric and the thin fiber nonwoven fabric in the subsequent entangling step.

As the entangling process, a spunlacing method, a needle punching method, or the like can be employed for entanglement between the thick fiber nonwoven fabric and the thin fiber nonwoven fabric. Of these entangling processes, the spunlacing method is preferably employed from the viewpoint of sufficiently entangling the long fibers of the thin fiber nonwoven fabric.

For example, in the spunlacing method, onto a layered body comprising the thick fiber nonwoven fabric and the thin fiber nonwoven fabric overlaid on the thick fiber nonwoven fabric, the layered body being placed on a porous support, are injected high pressure water jets (for example, at 1 MPa or higher) from a nozzle having fine holes. Then, the water jets penetrating the layered body hit on the support so as to be reflected to the layered body, whereby the fibers can be entangled owing to energy of the reflected water jets.

The spunlacing method may be performed by using, as the porous support, a drum-type porous support, a plate-type porous support, or a combination thereof. Among these porous supports, a plate-type porous support is preferably used. The porous support may have an aperture ratio of, for example, from about 10 to 50%, preferably from about 15 to 40%, and further preferably from about 20 to 30%. The porous support may have a hole diameter of, for example, from about 0.01 to 5.0 mm, preferably from about 0.05 to 3.0 mm, and more preferably from about 0.1 to 1.0 mm.

The pressure of the water jets can be set as appropriate according to the thickness of the layered body and the like, and may be, for example, from about 1 to 10 MPa, preferably from about 1.5 to 9.5 MPa, and further preferably from about 2 to 9 MPa.

Each of the holes in the nozzle used for injecting the water jets may have a diameter of, for example, from about 0.05 to 0.2 mm. The interval between the fine holes in the nozzle may be, for example, from about 0.3 to 5.0 mm, preferably from about 0.4 to 3.0 mm, and further preferably from about 0.5 to 2.0 mm.

One or a plurality of rows of the nozzles used for injecting the water jets may be provided. The number of the rows may be, for example, one to five. From the viewpoint of optimizing entanglement between the thick fiber nonwoven fabric and the thin fiber nonwoven fabric, the number of the rows may be preferably two or three. In the case of providing a plurality of rows of the nozzles, the pressure of the water jets may differ among the rows, and from the viewpoint of optimizing the entanglement between the thick fiber nonwoven fabric and the thin fiber nonwoven fabric, the pressure of the water jets to be applied onto the layered body is preferably increased in the machine direction (MD direction).

To entangle the thick fiber nonwoven fabric and the thin fiber nonwoven fabric, it is preferable that: the layered body including the thick fiber nonwoven fabric and the thin fiber nonwoven fabric overlaid on the thick fiber nonwoven fabric is placed on the above porous support; and an entangling process is performed under the above conditions while the layered body on the porous support is continuously transferred in the longitudinal direction at a constant speed. The speed of transferring the layered body may be, for example, from about 1.0 to 10.0 m/min, preferably from about 2.0 to 9.0 m/min, and more preferably from about 3.0 to 8.0 m/min. Where the speed of transferring the layered body is set to fall within the above range, the entanglement between the thick fiber nonwoven fabric and the thin fiber nonwoven fabric can be optimized, whereby the dust holding capacity of the obtained fiber structure can be further improved.

In addition, in the entangling process performed by the spunlacing method, the water jets may be injected from either the thick fiber nonwoven fabric side or the thin fiber nonwoven fabric side of the layered body, but from the viewpoint of sufficient entanglement between the thick fiber nonwoven fabric and the thin fiber nonwoven fabric, the water jets may be injected from the thin fiber nonwoven fabric side of the layered body.

Furthermore, depending on the intended use, the fiber structure may be subjected to an electrification process so as to have an improved filtration efficiency. The electrification process may be performed on the layered body before the entangling process, or may be performed on the fiber structure after the entangling process.

The electrification process is not particularly limited to a specific one as long as the fiber structure can be electrically charged. Examples of the electrification process may include: a process of imparting electric charges by friction or contact; a process of applying active energy rays (for example, electron beam, ultraviolet ray, X-ray, or the like); a process in which gas discharge such as corona discharge and plasma discharge is used; a process in which high electrical field is used; and a hydrocharging process in which a polar solvent such as water is used.

In the hydrocharging process, for example, the fiber structure is electrically charged by spraying a polar solvent such as water and an organic solvent (preferably water from the viewpoint of productivity in waste water treatment and the like) onto the fiber structure; vibrating the fiber structure while spraying the polar solvent ; or is suctioning from one side of the fiber structure after or while applying the polar solvent, whereby the inside of the fiber structure is permeated with the polar solvent. The pressure of the polar solvent to be collided with the fiber structure may be preferably from 0.1 to 5 MPa. The suction pressure from the lower side may be preferably from 500 to 5000 mmH$_2$O. The time for the hydrocharging process may be preferably from 0.001 to 5 seconds.

The fiber structure of the present invention may have a dust holding capacity of 4.3 mg or higher, preferably 4.5 mg or higher, more preferably 5.0 mg or higher, and further preferably 6.0 mg or higher. The fiber structure has a dust holding capacity as high as possible, and the upper limit thereof is not particularly limited to a specific one and may be about 30 mg. As used herein, the dust holding capacity means the amount of dust to be collected until the pressure loss becomes twice an initial value for the fiber structure attached to a circular filter holder having an inner diameter of 110 mm. The dust holding capacity is a value measured in accordance with the method described in Examples later.

The fiber structure of the present invention preferably has a filtration efficiency (initial filtration efficiency) as high as possible. From the viewpoint of controlling the pressure loss to fall within an appropriate range, the filtration efficiency may be, for example, 60% or higher (for example, 60% to 99.99%), preferably 70% or higher, and more preferably 80% or higher. As used herein, the filtration efficiency is a value measured in accordance with the method described in Examples later.

The pressure loss (initial pressure loss) of the fiber structure of the present invention may be adjusted to fall within, for example, a range from 0 to 30 Pa according to design regarding, for example, the fiber diameter of the constituent fibers and the like. For example, the pressure loss of the fiber structure may be from about 0 to 20 Pa, preferably from about 0 to 15 Pa, and more preferably from about 1 to 14 Pa. As used herein, the pressure loss is a value measured in accordance with the method described in Examples later.

The fiber structure of the present invention has a QF value of, for example, 0.10 or higher, preferably 0.15 or higher, and more preferably 0.19 or higher, the QF value being calculated from the filtration efficiency and the pressure loss according to the following formula. The fiber structure of the present invention preferably has a QF value as high as possible, and the upper limit thereof is not particularly limited to a specific one and may be, for example, about 2.00.

$$\text{QF value} = -\ln(1 - \text{filtration efficiency (\%)} / 100) / \text{pressure loss (Pa)}$$

Such a fiber structure can be suitably used in applications such as filters (in particular, air filters). Examples of such filters may include filters for masks, filters for various air conditioning systems (e.g., in buildings, cleanrooms, painting booths, or the like), filters for the motor vehicle industry (e.g., cabin filters or the like), filters for general household appliances (e.g., for air conditioners, air purifiers, vacuum cleaners, or the like), or the like. In the case where the fiber structure is used as filters, the filter can be used with the thick fiber group side thereof being regarded as the upstream side.

For example, the fiber structure of the present invention may be used as a filter sheet for masks. The mask of the present invention may include at least the fiber structure of the present invention as a covering portion for covering at least both or one of the mouth and the nose of a human body. For example, the mask may include the fiber structure as one of a plurality of layers constituting the covering portion. Alternatively, the fiber structure may be used as an intermediate sheet disposed between a breathing-side sheet and an outermost-surface-side sheet which constitute the mask.

In the present invention, the mask refers to a mask for covering at least both or one of the mouth and the nose (in particular, nostrils) of the human body, regardless of presence or absence of a fixation portion(s) such as a band(s) for fixation to the face. Furthermore, the mask may be for covering a portion other than the mouth and the nose of the human body. For example, a mask according to a modification of the present invention may be a therapy mask for sleep apnea syndrome (for example, a nasal mask, a full-face mask, or the like) used for CPAP therapy suitable for treating sleep apnea syndrome, NIPPV therapy suitable for treating ventilatory failure, or the like.

EXAMPLES

Hereinafter, the present invention will be described in more detail below on the basis of examples, but the present invention is not limited to these examples in any manner. Regarding examples and comparative examples presented below, various physical properties were measured according to the following methods.

Number-Average Single Fiber Diameter

The surface of each of fiber structures was observed using a scanning electron microscope. In an electron micrograph, fibers were randomly selected, and each single fiber diameter thereof was measured from each side surface of the single fibers. Among the fibers, fibers each having a single fiber diameter larger than 5.0 $\mu$m were regarded as thick fibers A, and the number-average fiber diameter (n = 100) of the thick fibers A was calculated, whereas fibers each having a single fiber diameter of 5.0 $\mu$m or smaller were regarded as thin fibers B, and the number-average fiber diameter (n = 100) of the thin fibers B was calculated.

Basis Weight and Apparent Density

In accordance with section 6.2 of JIS L 1913 "Test methods for nonwovens", a basis weight (g/m$^2$) was measured. In addition, an apparent density (g/cm$^3$) was calculated by dividing the basis weight by a thickness.

Thickness

Each of fiber structures and various nonwoven fabrics was, at ten arbitrarily-selected locations thereof, cut in a direction that was parallel to the thickness direction and perpendicular to the machine direction (MD) of the fiber structure or the nonwoven fabric using a razor blade ("Feather S single edge razor blade" manufactured by FEATHER Safety Razor Co., Ltd.). At the ten locations, cross-sectional images were obtained using a digital microscope, and cross sections shown in the respective images were observed. Then, in each of the cross sections of the fiber structure or the nonwoven fabric, an upper end and a lower end were determined, and the distance in the thickness direction from the upper end to the lower end was measured. The average value of the distances at these ten locations was calculated as thicknesses (mm) of the fiber structure and the various nonwoven fabric.

Filling Proportion of Fibers

Each of fiber structures was, at five arbitrarily-selected locations thereof, cut in a planar direction into 2.5 cm-square samples, and the samples were obtained. Then, each of the samples was subjected to X-ray computed tomography (X-ray CT) under the following conditions, whereby a three-dimensional image was obtained.

<Conditions for X-Ray CT>

Measurement device: Xradia 520 Versa (manufactured by Carl Zeiss Co., Ltd.)

X-ray target: tungsten
X-ray source intensity: 160 kV
Output: 10 W
Objective lens: 4X
Range of field of view in image: 1512 $\mu$m
Pixel size: 1.5 $\mu$m/pixel

Binning: 2
Exposure time: 2 seconds/sheets
Number of images: 3201 sheets
Imaging time: 4 hours

<Conditions for Image Analysis>

The obtained three-dimensional image was subjected to image analysis through the following procedure using image analysis software Avizo (manufactured by Thermo Fisher Scientific Inc.), whereby filling proportions of various fibers in respective regions were measured.

The obtained three-dimensional image, i.e., the three-dimensional image of the fiber structure sample, was cut into a size of 0.75 mm × 0.75 mm × overall thickness using the image analysis software. Then, noise was removed by using a Non-Local Filter function. The Non-Local Filter function was set to satisfy the following conditions.

Spatial Standard Deviation value: 5
Intensity Standard Deviation value: 0.2
Search window value: 10
Local Neighborhood value: 3

Then, binarization was performed by using an Interactive Thresholding function to extract all fibers. The threshold value was set to an arbitrarily-selected value between 30000 and 35000 in a 65536-gradation.

A Fiber Tracing function was used for the data with noise remove by the Non-Local Filter process, whereby fibers (thick fibers A) having a specific fiber diameter were extracted. The Fiber Tracing function was set to satisfy the following conditions.

Cylinder length value of Cylinder Correlation: an arbitrarily-selected value between 2.5 and 3.5 times the fiber diameter
Angular Sampling value: 5
Mask Cylinder Radius value: an arbitrarily-selected value between (fiber radius + 1) and (fiber radius + 13)
Outer Cylinder Radius value: a fiber radius
Inner Cylinder Radius value: 0
Direction Coefficient value of Trace Correlation Lines: 0.45
Minimum Distance value: an arbitrarily-selected value between the fiber radius and the fiber diameter

In addition, by using an Arithmetic function, the fibers each having the specific fiber diameter and extracted by using the Fiber Tracing function were subtracted from all the fibers extracted by using the Interactive Thresholding function, whereby only fibers (thin fibers B) having another fiber diameter were extracted.

By using the Arithmetic function, regions other than the regions of all the fibers extracted by using the Interactive Thresholding function were extracted as voids.

By using a Regional Volume Fraction function, the image data was analyzed per distance of 7.5 μm in the thickness direction, and the proportions (thick fibers A / thin fibers B/ voids) of the volumes of the thick fibers A, the thin fibers B, and the voids in each of the regions were determined. A region with at least 0.1 vol% of fibers was regarded as a region of the fiber structure and was set as a measurement range.

Where the thickness of the fiber structure measured as above was L (mm), all the above regions of the fiber structure analyzed at respective distances of 7.5 μm were integrated such that the thickness of each of ten division regions obtained by equally dividing the thickness L (mm) was L/10 (mm). Then, the cross section was divided into ten layers at respective thicknesses of L/10 (mm). The obtained ten layers were defined as first to tenth regions from a thin fiber group side to a thick fiber group side. In each of the regions, the filling proportions of the thick fibers A and the thin fibers B were determined.

In the same fiber structure sample (2.5 cm-square), analysis ranges each having a size of 0.75 mm × 0.75 mm × overall thickness were analyzed at ten locations at a pitch of 125 μm under the above analysis conditions. This analysis at ten locations was performed on each of the five samples, thereby obtaining a total of 50 values. The average value of these 50 values was obtained as a measurement result.

Furthermore, with the obtained ten layers being defined as the first to tenth regions from the thin fiber group side to the thick fiber group side, the average values of the filling proportions of the thick fibers A and the thin fibers B in the region S indicating the first to third regions, the average values of the filling proportions of the thick fibers A and the thin fibers B in the region T indicating the fourth to seventh regions, and the average values of the filling proportions of the thick fibers A and the thin fibers B in the region U indicating the eighth to tenth regions, were calculated.

Average Number of Fused Points

Each of fiber structures was cut in the planar direction into a 1 cm-square sample, and the sample was obtained. The surface on the thin fiber group side of the obtained sample was randomly imaged over 100 $\mu$m-square ranges by using a scanning electron microscope. Then, in the obtained image, the number of the locations at which the thin fibers B were fused to each other was measured at each of five 100 $\mu$m-square ranges in the image different from one another in the planar direction. The average value of these numbers was calculated. Regarding the number of the locations at which the thin fibers B were fused to each other, even if thin fibers B were fused at a plurality of locations belonging to the same thin fibers B, these locations were counted as different locations.

Filtration Efficiency, Pressure Loss, and QF Value

The collection performance of a fiber structure obtained in each of the Examples and the Comparative Examples was evaluated using a filter efficiency automatic detection device (AFT8130A manufactured by TSI Incorporated). First, a test sample was set on a circular filter holder having an inner diameter of 110 mm such that a thick fiber group side and a thin fiber group side of the test sample were oriented to the upstream side and the downstream side, respectively. In this state, NaCl particles having a mass median diameter of 0.26 $\mu$m were used as test particles and were introduced to the filter holder on which the test sample was set, for 10 seconds at a particle concentration of from 15 to 20 mg/m$^3$, an air flow rate of 32 L/min, and a face velocity of 5.33 cm/sec. Then, a particle concentration X1 on the upstream side and a particle concentration X2 on the downstream side (after filtration) were measured using a laser-type particle detector, and a filtration efficiency was determined according to the following formula.

$$\text{Filtration efficiency (\%)} = \{(X1 - X2) / X1\} \times 100$$

In addition, a micro differential pressure gauge was disposed between the upstream side and the downstream side of the filter holder in the above filter efficiency automatic detection device, and a differential pressure (pressure loss (Pa)) at an air flow rate of 32 L/min was measured.

Then, a QF value was calculated from the obtained filtration efficiency and the obtained pressure loss according to the following formula.

$$\text{QF value} = -\ln(1 - \text{filtration efficiency (\%)} / 100) / \text{pressure loss (Pa)}$$

Dust Holding Capacity

The collection performance of a fiber structure obtained in each of the Examples and the Comparative Examples was evaluated using the filter efficiency automatic detection device (AFT8130A manufactured by TSI Incorporated). First, a test sample was set on the circular filter holder having an inner diameter of 110 mm such that the thick fiber group side and the thin fiber group side of the test sample were oriented to the upstream side and the downstream side, respectively. In this state, NaCl particles having a mass median diameter of 0.26 $\mu$m were used as test particles and were introduced to the filter holder on which the test sample was set, for 60 minutes at a particle concentration of from 15 to 20 mg/m$^3$, an air flow rate of 32 L/min, and a face velocity of 5.33 cm/sec. Then, a filtration efficiency and a pressure loss were determined every 2 minutes through the same method as that described above. Then, a time t taken to reach a pressure loss that was 2 times the pressure loss obtained at the start of measurement was measured by using the obtained values. Furthermore, the weight of filtrated particles every two minutes was calculated from the upstream-side particle concentration, the air flow rate, and the filtration efficiency according to the following formula, and the sum of the weights obtained up until the end of the time t was used as a dust holding capacity.

Weight of filtrated particles every two minutes = upstream-side particle concentration (mg/m$^3$) $\times$ air flow rate (L/min) $\times$ 0.001 (m$^3$/L) $\times$ 2 (minutex) $\times$ filtration efficiency (%) / 100

Example 1

(1) Preparation of Thick Fiber Nonwoven Fabric

Using a general melt-blowing equipment, 100 parts by mass of polypropylene (MFR [at 230°C and a load of 21.18 N] = 30 g/10 min) were discharged from nozzle holes under the conditions of a spinning temperature of 260°C; an air temperature of 260°C; an air flow rate of 13 $Nm^3$/min; a single hole discharge rate of 0.3 g/hole • min; a hole diameter of 0.4 mm; and a hole interval of 1.5 mm. Then, hot air is jetted to discharged fibers so as to make them thin, and a fiber stream was collected at a collection distance of 32 cm to give a thick fiber nonwoven fabric (having a number-average single fiber diameter of 7.2 $\mu$m, a basis weight of 20 g/m$^2$, a thickness of 0.76 mm, and an apparent density of 0.03 g/cm$^3$).

(2) Preparation of Thin Fiber Nonwoven Fabric

Using the general melt-blowing equipment, 100 parts by mass of polypropylene (MFR [at 230°C and a load of 21.18 N] = 700 g/10 min) was melt-blown-spun under the conditions of a spinning temperature of 215°C; an air temperature of 215°C; an air flow rate of 10 $Nm^3$/min; a single hole discharge rate of 0.036 g/hole·min; a hole diameter of 0.3 mm; a hole interval of 0.75 mm; and a collection distance of 40 cm to give a thin fiber nonwoven fabric (having a number-average single fiber diameter of 1.2 $\mu$m, a basis weight of 10 g/m$^2$, a thickness of 0.10 mm, and an apparent density of 0.10 g/cm$^3$).

(3) Entangling Process of Thick Fiber Nonwoven Fabric and Thin Fiber Nonwoven Fabric

Next, the thick fiber nonwoven fabric obtained in the process (1) and the thin fiber nonwoven fabric obtained in the process (2) were overlaid on each other. The resultant layered body was placed on a porous support (with an aperture ratio of 25% and a hole diameter of 0.3 mm). Then, the layered body was continuously transferred in a longitudinal direction of the layered body at a speed of 5.0 m/min, while high-pressure water jets were injected from the thin fiber nonwoven fabric side using two nozzles (the distance between the adjacent nozzles: 20 cm) to which orifices each having a hole diameter of 0.10 mm were provided at intervals of 0.6 mm along a width direction of the layered body, with a first row of the nozzles injecting the high-pressure water jets at a water pressure of 2.0 MPa and a second row of the nozzles injecting the high-pressure water jets at a water pressure of 3.0 MPa, so as to perform an entangling process to give a fiber structure.

Subsequently, the fiber structure obtained by entanglement between the thick fiber nonwoven fabric and the thin fiber nonwoven fabric was subjected to an electrification process by a hydrocharging process. Specifically, under the following conditions, water was sprayed onto the fiber structure from one surface thereof, and then a slit suction nozzle was brought into contact with the other surface of the fiber structure so as to suction the water, whereby the inside of the fiber structure was permeated with the water. After the water was removed, the fiber structure was left to naturally dry.

- Pressure of water: 0.4 MPa
- Suction pressure: 2000 mmH$_2$O
- Processing time: 0.0042 seconds (at a speed of 20 m/min)

Table 1 shows results of various evaluation of the obtained fiber structure.

Example 2

The thick fiber nonwoven fabric obtained in the process (1) of Example 1 and the thin fiber nonwoven fabric obtained in the process (2) of Example 1 were overlaid on each other, and the resultant layered body was placed on the porous support used in Example 1. Then, the layered body was continuously transferred in a longitudinal direction of the layered body at a speed of 5.0 m/min, while high-pressure water jets were injected from the thin fiber nonwoven fabric side using three nozzles (the distances between the adjacent nozzles: 20 cm) to which orifices each having a hole diameter of 0.10 mm were provided at an interval of 0.6 mm along a width direction of the layered body, with a first row of the nozzles injecting the high-pressure water jets at a water pressure of 3.0 MPa, a second row of the nozzles injecting the high-pressure water jets at a water pressure of 5.0 MPa, and a third row of the nozzles injecting the high-pressure water jets at a water pressure of 10 MPa, so as to perform an entangling process. Subsequently, the electrification process was performed in the same manner as in Example 1 to give a fiber structure in which the thick fiber nonwoven fabric and the thin fiber nonwoven fabric were intermingled. Table 1 shows results of various evaluation of the obtained fiber structure.

Example 3

(1) Preparation of Thick Fiber Nonwoven Fabric

As a raw material, 100% by weight of polypropylene fibers (NF manufactured by UBE EXSYMO CO., LTD.) having a number-average single fiber diameter of 17.5 $\mu$m and a fiber length of 51 mm were subjected to carding to obtain a semi-random web. Subsequently, the obtained semi-random web was placed on a punching drum support having an aperture ratio of 25% and a hole diameter of 0.3 mm. Then, the semi-random web was continuously transferred in a longitudinal direction at a speed of 5.0 m/min, while high-pressure water jets were injected from the upper side so as to perform an entangling process to produce an intermingled fiber web (nonwoven fabric). In this entangling process, spunlacing was performed using two nozzles (the distance between the adjacent nozzles: 20 cm) to which orifices each having a hole diameter of 0.10 mm were provided at an interval of 0.6 mm along a width direction of the web, with a first row of the nozzles injecting the high-pressure water jets at a water pressure of 3.0 MPa and a second raw of the nozzles injecting the high-pressure water jets at a water pressure of 5.0 MPa. Furthermore, the fiber web was flipped, and was subjected to the same entangling process to give a thick fiber nonwoven fabric (having a basis weight of 35 g/m$^2$, a thickness of 0.42 mm, and an apparent density of 0.08 g/cm$^3$).

(2) Preparation of Thin Fiber Nonwoven Fabric

Using the general melt-blowing equipment, 100 parts by mass of polypropylene (MFR [at 230°C and a load of 21.18 N] = 700 g/10 min) was melt-blown-spun under the conditions of a spinning temperature of 215°C; an air temperature of 215°C; an air volume of 0.4 MPa; a single hole discharge rate of 0.1 g/hole·min; a hole diameter of 0.3 mm; a hole interval of 0.6 mm (one-row arrangement); and a collection distance of 40 cm to give a thin fiber nonwoven fabric (having a number-average single fiber diameter of 2.5 $\mu$m, a basis weight of 10 g/m$^2$, a thickness of 0.11 mm, and an apparent density of 0.10 g/cm$^3$).

(3) Entangling Process of Thick Fiber Nonwoven Fabric and Thin Fiber Nonwoven Fabric

Next, the thick fiber nonwoven fabric obtained in the process (1) and the thin fiber nonwoven fabric obtained in the process (2) were overlaid on each other. The resultant layered body was placed on the porous support used in Example 1. Then, the layered body was continuously transferred in a longitudinal direction of the layered body at a speed of 5.0 m/min, while high-pressure water jets were injected from the thin fiber nonwoven fabric side using one nozzle to which orifices each having a hole diameter of 0.10 mm were provided at an interval of 0.6 mm along a width direction of the layered body, with the nozzle injecting the high-pressure water jets at a water pressure of 3.0 MPa, so as to perform an entangling process. Subsequently, the electrification process was performed in the same manner as in Example 1 to give a fiber structure in which the thick fiber nonwoven fabric and the thin fiber nonwoven fabric were intermingled. Table 1 shows results of various evaluation of the obtained fiber structure.

Example 4

The thick fiber nonwoven fabric obtained in the process (1) of Example 3 and the thin fiber nonwoven fabric obtained in the process (2) of Example 3 were overlaid on each other, and the resultant layered body was placed on the porous support used in Example 1. Then, the layered body was continuously transferred in a longitudinal direction of the layered body at a speed of 5.0 m/min, while high-pressure water jets were injected from the thin fiber nonwoven fabric side using one nozzle to which orifices each having a hole diameter of 0.10 mm were provided at an interval of 0.6 mm along a width direction of the layered body, with the nozzle injecting the high-pressure water jets at a water pressure of 7.0 MPa, so as to perform an entangling process. Subsequently, the electrification process was performed in the same manner as in Example 1 to give a fiber structure in which the thick fiber nonwoven fabric and the thin fiber nonwoven fabric were intermingled. Table 1 shows results of various evaluation of the obtained fiber structure, Fig. 1 shows an enlarged image showing a cross section of the obtained fiber structure, and Fig. 2 shows an enlarged image showing a surface on the thin fiber group side of the obtained fiber structure.

Example 5

The thick fiber nonwoven fabric obtained in the process (1) of Example 3 and the thin fiber nonwoven fabric obtained in the process (2) of Example 3 were overlaid on each other, and the resultant layered body was placed on the porous support used in Example 1. Then, the layered body was continuously transferred in a longitudinal direction of the layered body at a speed of 5.0 m/min, while high-pressure water jets were injected from the thin fiber nonwoven fabric side using three nozzles (the distances between the adjacent nozzles: 20 cm) to which orifices each having a hole diameter of 0.10 mm were provided at an interval of 0.6 mm along a width direction of the layered body, with a first row of the nozzles injecting the high-pressure water jets at a water pressure of 3.0 MPa, a second row of the nozzles injecting the high-pressure water jets at a water pressure of 5.0 MPa, and a third row of the nozzles injecting the high-pressure water jets at a water pressure of 10 MPa, so as to perform an entangling process. Subsequently, the electrification process was performed in the same manner as in Example 1 to give a fiber structure in which the thick fiber nonwoven fabric and the thin fiber nonwoven fabric were intermingled. Table 1 shows results of various evaluation of the obtained fiber structure.

Example 6

(1) Preparation of Thin Fiber Nonwoven Fabric

Using the general melt-blowing equipment, 100 parts by mass of polypropylene (MFR [at 230°C and a load of 21.18 N] = 700 g/10 min) was melt-blown-spun under the conditions of a spinning temperature of 215°C; an air temperature of 215°C; an air volume of 0.4 MPa; a single hole discharge rate of 0.1 g/hole·min; a hole diameter of 0.3 mm; a hole interval of 0.6 mm (one-row arrangement); and a collection distance of 70 cm to give a thin fiber nonwoven fabric (having a number-average single fiber diameter of 2.5 $\mu$m, a basis weight of 10 g/m$^2$, a thickness of 0.11 mm, and an apparent density of 0.10 g/cm$^3$).

(2) Entangling Process of Thick Fiber Nonwoven Fabric and Thin Fiber Nonwoven Fabric

The thick fiber nonwoven fabric obtained in the process (1) of Example 3 and the thin fiber nonwoven fabric obtained in the process (1) of Example 6 were overlaid on each other, and the resultant layered body was placed on the porous support used in Example 1. Then, the layered body was continuously transferred in a longitudinal direction of the layered body at a speed of 5.0 m/min, while high-pressure water jets were injected from the thin fiber nonwoven fabric side using one nozzle to which orifices each having a hole diameter of 0.10 mm were provided at an interval of 0.6 mm along a width direction of the layered body, with the nozzle injecting the high-pressure water jets at a water pressure of 4.0 MPa, so as to perform an entangling process. Subsequently, the electrification process was performed in the same manner as in Example 1 to give a fiber structure in which the thick fiber nonwoven fabric and the thin fiber nonwoven fabric were intermingled. Table 1 shows results of various evaluation of the obtained fiber structure.

Comparative Example 1

(1) Preparation of Thin Fiber Nonwoven Fabric

Using the general melt-blowing equipment, 100 parts by mass of polypropylene (MFR [at 230°C and a load of 21.18 N] = 700 g/10 min) was melt-blown-spun under the conditions of a spinning temperature of 215°C; an air temperature of 215°C; an air flow rate of 10 Nm$^3$/min; a single hole discharge rate of 0.036 g/hole·min; a hole diameter of 0.3 mm; a hole interval was 0.75 mm; and a collection distance of 10 cm to give a thin fiber nonwoven fabric (having a number-average single fiber diameter of 1.2 $\mu$m, a basis weight of 10 g/m$^2$, a thickness of 0.10 mm, and an apparent density of 0.10 g/cm$^3$).

(2) Entangling Process of Thick Fiber Nonwoven Fabric and Thin Fiber Nonwoven Fabric

The thick fiber nonwoven fabric obtained in the process (1) of Example 1 and the thin fiber nonwoven fabric obtained in the process (1) of Comparative Example 1 were overlaid on each other, and the resultant layered body was placed on the porous support used in Example 1. Then, the layered body was continuously transferred in a longitudinal direction of the layered body at a speed of 5.0 m/min, while high-pressure water jets were injected from the thick fiber nonwoven fabric side using two nozzles (the distance between the adjacent nozzles: 20 cm) to which orifices each having a hole diameter of 0.10 mm were provided at an interval of 0.6 mm along a width direction of the layered body, with a first row of the nozzles injecting the high-pressure water jets at a water pressure of 2.0 MPa and a second row of the nozzles injecting the high-pressure water jets at a water pressure of 3.0 MPa, so as to perform an entangling process. Subsequently, the electrification process was performed in the same manner as in Example 1 to give a fiber structure in which the thick fiber nonwoven fabric and the thin fiber nonwoven fabric were intermingled. Table 1 shows results of various evaluation of the obtained fiber structure.

Comparative Example 2

(1) Preparation of Thin Fiber Nonwoven Fabric

Using the general melt-blowing equipment, 100 parts by mass of polypropylene (MFR [at 230°C and a load of 21.18 N] = 700 g/10 min) was melt-blown-spun under the conditions of a spinning temperature of 215°C; an air temperature of 215°C; an air volume of 0.4 MPa; a single hole discharge rate of 0.1 g/hole·min; a hole diameter of 0.3 mm; a hole interval of 0.6 mm (one-row arrangement); and a collection distance of 30 cm to give a thin fiber nonwoven fabric (having a number-average single fiber diameter of 2.5 $\mu$m, a basis weight of 10 g/m$^2$, a thickness of 0.11 mm, and an apparent density of 0.10 g/cm$^3$).

(2) Entangling Process of Thick Fiber Nonwoven Fabric and Thin Fiber Nonwoven Fabric

The thick fiber nonwoven fabric obtained in the process (1) of Example 3 and the thin fiber nonwoven fabric obtained in the process (1) of Comparative Example 2 were overlaid on each other, and the resultant layered body was placed on the porous support used in Example 1. Then, the layered body was continuously transferred in a longitudinal direction of the layered body at a speed of 5.0 m/min, while high-pressure water jets injected from the thin fiber nonwoven fabric side using one nozzle to which orifices each having a hole diameter of 0.10 mm were provided at an interval of 0.6 mm along a width direction of the layered body, with the nozzle injecting the high-pressure water jets at a water pressure of 3.0 MPa, so as to perform an entangling process. Subsequently, the electrification process was performed in the same manner as in Example 1 to give a fiber structure in which the thick fiber nonwoven fabric and the thin fiber nonwoven fabric were intermingled. Table 1 shows results of various evaluation of the obtained fiber structure.

Comparative Example 3

(1) Preparation of Thin Fiber Nonwoven Fabric

Using the general melt-blowing equipment, 100 parts by mass of polypropylene (MFR [at 230°C and a load of 21.18 N] = 700 g/10 min) was melt-blown-spun under the conditions of a spinning temperature of 215°C; an air temperature of 215°C; an air volume of 0.4 MPa; a single hole discharge rate of 0.1 g/hole·min; a hole diameter of 0.3 mm; a hole interval of 0.6 mm (one-row arrangement); and a collection distance of 100 cm to give a thin fiber nonwoven fabric (having a number-average single fiber diameter of 2.5 $\mu$m, a basis weight of 10 g/m$^2$, a thickness of 0.11 mm, and an apparent density of 0.10 g/cm$^3$).

(2) Entangling Process of Thick Fiber Nonwoven Fabric and Thin Fiber Nonwoven Fabric

The thick fiber nonwoven fabric obtained in the process (1) of Example 3 and the thin fiber nonwoven fabric obtained in the process (1) of Comparative Example 3 were overlaid on each other, and the resultant layered body was placed on the porous support used in Example 1. Then, the layered body was continuously transferred in a longitudinal direction of the layered body at a speed of 5.0 m/min, while high-pressure water jets were injected from the thin fiber nonwoven fabric side using one nozzle to which orifices each having a hole diameter of 0.10 mm were provided at an interval of 0.6 mm along a width direction of the layered body, with the nozzle injecting the high-pressure water jets at a water pressure of 4.0 MPa, so as to perform an entangling process. Subsequently, the electrification process was performed in the same manner as in Example 1 to give a fiber structure in which the thick fiber nonwoven fabric and the thin fiber nonwoven fabric were intermingled. Table 1 shows results of various evaluation of the obtained fiber structure.

## Table 1

| | | | Units | Example 1 | | | | Example 2 | | | | Example 3 | | | | Example 4 | | | | Example 5 | | | | Example 6 | | | |
|---|---|---|---|---|---|---|---|---|---|---|---|---|---|---|---|---|---|---|---|---|---|---|---|---|---|---|---|
| **Fiber structure manufacturing conditions** | | | | | | | | | | | | | | | | | | | | | | | | | | | |
| Thick Fiber Nonwoven Fabric | Nonwoven Fabric | | | Melt-blown | | | | Melt-blown | | | | Spunlace | | | | Spunlace | | | | Spunlace | | | | Spunlace | | | |
| | Number-Average Fiber Diameter | | µm | 7.2 | | | | 7.2 | | | | 17.5 | | | | 17.5 | | | | 17.5 | | | | 17.5 | | | |
| | Basis Weight | | g/m² | 20 | | | | 20 | | | | 35 | | | | 35 | | | | 35 | | | | 35 | | | |
| | Thickness | | mm | 0.76 | | | | 0.76 | | | | 0.42 | | | | 0.42 | | | | 0.42 | | | | 0.42 | | | |
| | Apparent Density | | g/cm³ | 0.03 | | | | 0.03 | | | | 0.08 | | | | 0.08 | | | | 0.08 | | | | 0.08 | | | |
| Thin Fiber Nonwoven Fabric | Nonwoven Fabric | | | Melt-blown | | | | Melt-blown | | | | Melt-blown | | | | Melt-blown | | | | Melt-blown | | | | Melt-blown | | | |
| | Number-Average Fiber Diameter | | µm | 1.2 | | | | 1.2 | | | | 2.5 | | | | 2.5 | | | | 2.5 | | | | 2.5 | | | |
| | Basis Weight | | g/m² | 10 | | | | 10 | | | | 10 | | | | 10 | | | | 10 | | | | 10 | | | |
| | Thickness | | mm | 0.10 | | | | 0.10 | | | | 0.11 | | | | 0.11 | | | | 0.11 | | | | 0.11 | | | |
| | Apparent Density | | g/cm³ | 0.10 | | | | 0.10 | | | | 0.10 | | | | 0.10 | | | | 0.10 | | | | 0.10 | | | |
| | Collection Distance | | cm | 40 | | | | 40 | | | | 40 | | | | 40 | | | | 40 | | | | 70 | | | |
| Entanglement condition | Water pressure | | wt% | 2-3 | | | | 3-5-10 | | | | 3 | | | | 7 | | | | 3-5-10 | | | | 4 | | | |
| **Fiber structure** | | | | | | | | | | | | | | | | | | | | | | | | | | | |
| Basis Weight | | | g/m² | 30 | | | | 30 | | | | 45 | | | | 45 | | | | 45 | | | | 45 | | | |
| Thickness | | | mm | 0.76 | | | | 0.69 | | | | 0.39 | | | | 0.39 | | | | 0.39 | | | | 0.39 | | | |
| Apparent Density | | | g/cm³ | 0.04 | | | | 0.04 | | | | 0.12 | | | | 0.12 | | | | 0.12 | | | | 0.12 | | | |
| Filling Proportion | | | | Thick Fiber A | Thin Fiber B | Void | A/B | Thick Fiber A | Thin Fiber B | Void | A/B | Thick Fiber A | Thin Fiber B | Void | A/B | Thick Fiber A | Thin Fiber B | Void | A/B | Thick Fiber A | Thin Fiber B | Void | A/B | Thick Fiber A | Thin Fiber B | Void | A/B |
| Region S | $M_1$ | | | 0.00% | 2.00% | 98.00% | 0.00 | 0.00% | 0.14% | 99.86% | 0.00 | 0.07% | 8.71% | 91.22% | 0.01 | 0.00% | 0.79% | 99.21% | 0.00 | 0.04% | 0.44% | 99.52% | 0.09 | 0.04% | 0.55% | 99.41% | 0.07 |
| | $M_2$ | | | 0.08% | 6.28% | 93.64% | 0.01 | 1.72% | 1.87% | 96.41% | 0.92 | 4.71% | 4.13% | 91.16% | 1.14 | 1.35% | 12.32% | 86.33% | 0.11 | 3.97% | 6.23% | 89.80% | 0.64 | 2.41% | 8.12% | 89.47% | 0.30 |
| | $M_3$ | | | 0.11% | 8.09% | 91.79% | 0.01 | 6.11% | 5.73% | 88.16% | 1.07 | 9.11% | 0.15% | 90.74% | 60.73 | 13.00% | 7.06% | 79.94% | 1.84 | 11.26% | 3.89% | 84.85% | 2.89 | 11.12% | 4.10% | 84.78% | 2.71 |
| | Average (S) | | | 0.06% | 5.46% | 94.48% | 0.01 | 2.61% | 2.58% | 94.81% | 1.01 | 4.63% | 4.33% | 91.04% | 1.07 | 4.78% | 6.73% | 88.49% | 0.71 | 5.09% | 3.52% | 91.39% | 1.44 | 3.28% | 5.11% | 91.61% | 0.64 |
| Region T | $M_4$ | | | 0.23% | 6.35% | 93.42% | 0.04 | 15.62% | 6.46% | 77.92% | 2.42 | 11.91% | 0.00% | 88.09% | - | 18.85% | 0.89% | 80.26% | 21.14 | 12.86% | 1.22% | 85.92% | 10.53 | 16.39% | 1.32% | 82.29% | 12.42 |
| | $M_5$ | | | 2.45% | 2.87% | 94.68% | 0.86 | 10.39% | 1.79% | 87.82% | 5.80 | 11.79% | 0.00% | 88.21% | - | 15.37% | 0.45% | 84.18% | 34.08 | 12.06% | 0.84% | 87.10% | 14.36 | 15.43% | 0.78% | 83.79% | 19.78 |
| | $M_6$ | | | 5.56% | 0.41% | 94.04% | 13.61 | 4.24% | 0.60% | 95.16% | 7.07 | 8.46% | 0.00% | 91.54% | - | 11.62% | 0.29% | 88.10% | 40.68 | 12.45% | 1.06% | 86.48% | 11.71 | 13.51% | 0.93% | 85.56% | 14.53 |
| | $M_7$ | | | 6.78% | 0.35% | 92.87% | 19.56 | 2.07% | 0.63% | 97.30% | 3.29 | 6.28% | 0.00% | 93.72% | - | 11.36% | 0.06% | 88.58% | 176.64 | 9.56% | 0.87% | 89.58% | 11.02 | 10.44% | 0.84% | 88.72% | 12.43 |
| | Average (T) | | | 3.76% | 2.49% | 93.75% | 1.51 | 8.08% | 2.37% | 89.55% | 3.41 | 9.61% | 0.00% | 90.39% | - | 14.30% | 0.42% | 85.28% | 33.79 | 11.73% | 1.00% | 87.27% | 11.76 | 14.37% | 0.53% | 85.10% | 27.11 |
| Region U | $M_8$ | | | 10.09% | 0.60% | 89.31% | 16.87 | 0.38% | 0.52% | 99.10% | 0.73 | 2.77% | 0.00% | 97.23% | - | 7.24% | 0.10% | 92.67% | 75.51 | 5.22% | 0.73% | 94.05% | 7.12 | 4.53% | 0.32% | 95.15% | 14.16 |
| | $M_9$ | | | 4.95% | 0.12% | 94.93% | 41.51 | 0.01% | 0.15% | 99.84% | 0.07 | 1.16% | 0.00% | 98.84% | - | 3.64% | 0.08% | 96.28% | 44.23 | 2.80% | 0.47% | 96.73% | 5.95 | 3.01% | 0.12% | 96.87% | 25.08 |
| | $M_{10}$ | | | 0.29% | 0.00% | 99.70% | 171.57 | 0.00% | 0.05% | 99.95% | 0.00 | 0.11% | 0.00% | 99.89% | - | 1.60% | 0.03% | 98.37% | 56.50 | 0.67% | 0.16% | 99.17% | 4.08 | 0.78% | 0.18% | 99.04% | 4.33 |
| | Average (U) | | | 5.11% | 0.24% | 94.65% | 21.32 | 0.13% | 0.24% | 99.63% | 0.54 | 1.34% | 0.00% | 98.65% | - | 4.16% | 0.07% | 95.77% | 60.43 | 2.89% | 0.46% | 96.65% | 6.35 | 3.22% | 0.29% | 96.49% | 11.10 |
| All regions | $M$ | | | 3.05% | 2.71% | 94.24% | 1.13 | 4.05% | 1.79% | 94.15% | 2.26 | 5.64% | 1.30% | 93.06% | 4.34 | 8.40% | 2.21% | 89.39% | 3.81 | 7.09% | 1.59% | 91.32% | 4.45 | 7.77% | 1.73% | 90.51% | 4.50 |
| SA+SB | | | | 5.52% | | | | 5.19% | | | | 8.96% | | | | 11.51% | | | | 8.61% | | | | 8.39% | | | |
| TA+TB | | | | 6.25% | | | | 10.45% | | | | 9.61% | | | | 14.72% | | | | 12.73% | | | | 14.90% | | | |
| UA+UB | | | | 5.35% | | | | 0.37% | | | | 1.35% | | | | 4.23% | | | | 3.35% | | | | 3.51% | | | |
| SB+UA | | | | 10.56% | | | | 2.71% | | | | 5.68% | | | | 10.88% | | | | 6.42% | | | | 8.33% | | | |
| Average Number of Fused Points | | Points | | 2.3 | | | | 2.3 | | | | 4.2 | | | | 4.2 | | | | 4.2 | | | | 1.1 | | | |
| Filtration Efficiency | | % | | 88.81 | | | | 62.58 | | | | 98.1 | | | | 92.35 | | | | 82.15 | | | | 90.22 | | | |
| Pressure Loss | | Pa | | 8 | | | | 5 | | | | 14 | | | | 13 | | | | 7 | | | | 9 | | | |
| QF Value | | | | 0.27 | | | | 0.20 | | | | 0.28 | | | | 0.20 | | | | 0.25 | | | | 0.26 | | | |
| Dust Holding Capacity | | mg | | 4.43 | | | | 5.02 | | | | 6.38 | | | | 7.54 | | | | 10.45 | | | | 10.27 | | | |

## Table 1 Continued

| Fiber structure manufacturing conditions | | | Comparative Example 1 | | | | Comparative Example 2 | | | | Comparative Example 3 | | | |
|---|---|---|---|---|---|---|---|---|---|---|---|---|---|---|
| Thick Fiber Nonwoven Fabric | Nonwoven Fabric | | Melt-blown | | | | Spunlace | | | | Spunlace | | | |
| | Number-Average Fiber Diameter | μm | 7.2 | | | | 17.5 | | | | 17.5 | | | |
| | Basis Weight | g/m² | 20 | | | | 35 | | | | 35 | | | |
| | Thickness | mm | 0.76 | | | | 0.42 | | | | 0.42 | | | |
| | Apparent Density | g/cm³ | 0.03 | | | | 0.08 | | | | 0.08 | | | |
| Thin Fiber Nonwoven Fabric | Nonwoven Fabric | | Melt-blown | | | | Melt-blown | | | | Melt-blown | | | |
| | Number-Average Fiber Diameter | μm | 1.2 | | | | 2.5 | | | | 2.5 | | | |
| | Basis Weight | g/m² | 10 | | | | 10 | | | | 10 | | | |
| | Thickness | mm | 0.10 | | | | 0.11 | | | | 0.11 | | | |
| | Apparent Density | g/cm³ | 0.10 | | | | 0.10 | | | | 0.10 | | | |
| | Collection Distance | cm | 10 | | | | 30 | | | | 100 | | | |
| Entanglement condition | Water pressure | wt% | 2-3 | | | | 3 | | | | 4 | | | |

| Fiber structure | | | CE1 Thick Fiber A | CE1 Thin Fiber B | CE1 Void | CE1 A/B | CE2 Thick Fiber A | CE2 Thin Fiber B | CE2 Void | CE2 A/B | CE3 Thick Fiber A | CE3 Thin Fiber B | CE3 Void | CE3 A/B |
|---|---|---|---|---|---|---|---|---|---|---|---|---|---|---|
| Basis Weight | | g/m² | 30 | | | | 45 | | | | 45 | | | |
| Thickness | | mm | 0.76 | | | | 0.39 | | | | 0.39 | | | |
| Apparent Density | | g/cm³ | 0.03 | | | | 0.12 | | | | 0.12 | | | |
| Filling Proportion — Region S | $M_1$ | | 0.00% | 5.14% | 94.86% | 0.00 | 0.00% | 7.45% | 92.55% | 0.00 | 0.00% | 8.23% | 91.77% | 0.00 |
| | $M_2$ | | 0.04% | 6.46% | 93.50% | 0.01 | 1.35% | 18.34% | 80.31% | 0.07 | 0.45% | 17.21% | 82.34% | 0.03 |
| | $M_3$ | | 0.09% | 8.65% | 91.26% | 0.01 | 9.28% | 8.12% | 82.60% | 1.14 | 2.18% | 6.51% | 91.31% | 0.33 |
| | Average (S) | | 0.04% | 6.75% | 93.21% | 0.01 | 3.54% | 11.30% | 85.16% | 0.31 | 4.13% | 10.30% | 85.57% | 0.40 |
| Filling Proportion — Region T | $M_4$ | | 0.23% | 5.43% | 94.34% | 0.04 | 16.11% | 0.64% | 83.25% | 25.17 | 14.12% | 1.53% | 84.35% | 9.23 |
| | $M_5$ | | 2.35% | 1.87% | 95.78% | 1.26 | 15.37% | 0.45% | 84.18% | 34.08 | 13.57% | 1.38% | 85.05% | 9.83 |
| | $M_6$ | | 6.16% | 0.41% | 93.43% | 15.09 | 11.62% | 0.29% | 88.10% | 40.68 | 10.88% | 0.89% | 88.23% | 12.22 |
| | $M_7$ | | 5.78% | 0.35% | 93.87% | 16.67 | 11.36% | 0.06% | 88.58% | 176.64 | 12.45% | 0.04% | 87.51% | 311.25 |
| | Average (T) | | 3.63% | 2.01% | 94.36% | 1.81 | 12.61% | 0.36% | 87.03% | 35.03 | 10.71% | 0.20% | 89.09% | 53.55 |
| Filling Proportion — Region U | $M_8$ | | 8.09% | 0.47% | 91.44% | 17.21 | 7.24% | 0.06% | 92.70% | 120.65 | 9.85% | 0.12% | 90.03% | 82.08 |
| | $M_9$ | | 5.51% | 0.12% | 94.37% | 46.24 | 3.64% | 0.02% | 96.34% | 181.95 | 5.43% | 0.03% | 94.54% | 181.00 |
| | $M_{10}$ | | 2.45% | 0.00% | 97.55% | - | 1.84% | 0.01% | 98.15% | 184.00 | 2.26% | 0.01% | 97.73% | 226.00 |
| | Average (U) | | 5.35% | 0.20% | 94.45% | 26.75 | 4.24% | 0.03% | 95.73% | 141.33 | 3.69% | 0.01% | 96.30% | 369.00 |
| All regions | $M$ | | 3.07% | 2.89% | 94.04% | 1.06 | 7.78% | 3.54% | 88.68% | 2.20 | 7.12% | 3.60% | 89.29% | 1.98 |
| SA+SB | | | 6.79% | | | | 14.84% | | | | 14.43% | | | |
| TA+TB | | | 5.64% | | | | 12.97% | | | | 10.91% | | | |
| UA+UB | | | 5.55% | | | | 4.27% | | | | 3.70% | | | |
| SB+UA | | | 12.10% | | | | 15.54% | | | | 13.99% | | | |
| Average Number of Fused Points | | Points | 14.1 | | | | 11.2 | | | | 0.8 | | | |
| Filtration Efficiency | | % | 82.11 | | | | 93.85 | | | | 73.49 | | | |
| Pressure Loss | | Pa | 8 | | | | 15 | | | | 7 | | | |
| QF Value | | | 0.22 | | | | 0.12 | | | | 0.19 | | | |
| Dust Holding Capacity | | mg | 3.03 | | | | 4.17 | | | | 3.44 | | | |

As shown in Table 1, in each of Comparative Examples 1 to 3, the filling proportions of the fibers in the region S, the region T, and the region U are in a relationship of SA + SB > TA + TB > UA + UB. That is, the filling proportions of the thick fibers A and the thin fibers B are not in the specific relationship. In addition, in each of Comparative Examples 1 to 3, the average number of fused points between the thin fibers B is not within the specific range, and the dust holding capacity is low.

On the other hand, in each of Examples 1 and 2, SB is the highest among SB, TB, and UB, and the specific relationship of TA + TB > SA + SB > UA + UB is satisfied. In addition, in each of Examples 1 and 2, the average number of fused points between the thin fibers B is within the specific range. Despite the fact that each of these fiber structures was manufactured by using a thick fiber nonwoven fabric and a thin fiber nonwoven fabric having average fiber diameters equivalent to those in Comparative Example 1, the dust holding capacities of these fiber structures are at least 1.4 times as high as that of Comparative Example 1.

Likewise, in each of Examples 3 to 6, the thick fibers A and the thin fibers B in each of the regions have the specific distribution, and the average number of fused points between the thin fibers B is within the specific range. Despite the fact that each of these fiber structures was manufactured by using a thick fiber nonwoven fabric and a thin fiber nonwoven fabric having average fiber diameters equivalent to those in Comparative Examples 2 and 3, the dust holding capacities of these fiber structures are at least 1.5 times as high as those of Comparative Examples 2 and 3.

INDUSTRIAL APPLICABILITY

The fiber structure of the present invention can have a high dust holding capacity and a long lifespan, and thus, can be suitably used as various filters (in particular, an air filter, a bag filter, or a liquid filter) or the like. For example, the fiber structure can be used as a filter for a mask, a filter for various air conditioning systems (e.g., in a building, a cleanroom, a painting booth, or the like), a filter for the motor vehicle industry (e.g., a cabin filter or the like), a filter for a general household appliance (e.g., for an air conditioner, an air purifier, a vacuum cleaner, or the like), or the like.

Although the present invention has been described above in connection with the preferred embodiment thereof, various additions, modifications, and deletions may be made without departing from the scope of the present invention. Therefore, such additions, modifications, and deletions are also construed as included within the scope of the present invention.

[Reference Numerals]

A ···· thick fiber A
B ···· thin fiber B
100 ···· fiber structure
101 ···· thin fiber group side
102 ···· thick fiber group side
1 to 10 ···· first to tenth regions
S ···· region S
T ···· region T
U ···· region U
Z ···· thickness direction

**Claims**

1. A fiber structure comprising a thick fiber group composed of fibers A each having a single fiber diameter larger than 5 $\mu$m and a thin fiber group composed of fibers B each having a single fiber diameter of 5 $\mu$m or smaller, and

   the fiber structure having an intermingled region in which the thick fiber group and the thin fiber group are intermingled, wherein
   where the fiber structure is equally divided into ten regions in a thickness direction thereof; the regions are defined as first to tenth regions from the thin fiber group side to the thick fiber group side; and the first to third regions, the fourth to seventh regions, and the eighth to tenth regions are defined as regions S, T, and U, respectively,
   the fiber structure satisfies
   the condition that SB is the highest among SB, TB, and UB, and
   the expression of $TA + TB > SA + SB > UA + UB$,
   in which SA, TA, and UA represent filling proportions of the fibers A existing in the regions S, T, and U, respectively, and SB, TB, and UB represent filling proportions of the fibers B existing in the regions S, T, and U, respectively.

2. The fiber structure according to claim 1, wherein an average number of fused points between the fibers B is 10 or smaller in a 100 $\mu$m-square range spreading in a planar direction of the fiber structure.

3. The fiber structure according to claim 2, wherein the fused points between the fibers B are derived from melt blowing.

4. A fiber structure comprising a thick fiber group composed of fibers A each having a single fiber diameter larger than 5 $\mu$m and a thin fiber group composed of fibers B each having a single fiber diameter of 5 $\mu$m or smaller, and

   the fiber structure having an intermingled region in which the thick fiber group and the thin fiber group are intermingled,
   wherein an average number of fused points between the fibers B is 1.0 or larger and 10.0 or smaller in a 100 $\mu$m-square range spreading in a planar direction of the fiber structure.

**5.** The fiber structure according to claim 4, wherein the fused points between the fibers B are derived from melt blowing.

**6.** The fiber structure according to claim 4 or 5, wherein

where the fiber structure is equally divided into ten regions in a thickness direction thereof; the regions are defined as first to tenth regions from the thin fiber group side to the thick fiber group side; and the first to third regions, the fourth to seventh regions, and the eighth to tenth regions are defined as regions S, T, and U, respectively,
the fiber structure satisfies
the condition that SB is the highest among SB, TB, and UB, and
the expression of TA + TB > SA + SB > UA + UB,
in which SA, TA, and UA represent filling proportions of the fibers A existing in the regions S, T, and U, respectively, and SB, TB, and UB represent filling proportions of the fibers B existing in the regions S, T, and U, respectively.

**7.** The fiber structure according to any one of claims 1 to 6, wherein the fiber structure is an entangled product of a thick fiber nonwoven fabric comprising the fibers A and a thin fiber nonwoven fabric comprising the fibers B.

**8.** The fiber structure according to any one of claims 1 to 7, wherein the thick fiber group has a number-average single fiber diameter of 5.5 $\mu$m or larger, and the thin fiber group has a number-average single fiber diameter of 4.5 $\mu$m or smaller.

**9.** The fiber structure according to any one of claims 1 to 8, wherein the fiber structure has a basis weight of from 15 to 180 g/m$^2$.

**10.** The fiber structure according to any one of claims 1 to 9, wherein the fiber structure is electrically charged.

**11.** The fiber structure according to any one of claims 1 to 10, wherein the fiber structure has a filtration efficiency of 60% or higher.

**12.** The fiber structure according to any one of claims 1 to 11, wherein the fiber structure has a QF value of 0.10 or larger, the QF value being calculated from a filtration efficiency and a pressure loss according to the following formula:

$$\text{QF value} = -\ln(1 - \text{filtration efficiency (\%) / 100) / pressure loss (Pa)}.$$

**13.** A filter comprising the fiber structure as recited in any one of claims 1 to 12.

**14.** A mask comprising the filter as recited in claim 13.

Fig. 1

Fig. 2

Fig. 3

## INTERNATIONAL SEARCH REPORT

| International application No. |
|---|
| **PCT/JP2022/025285** |

**A. CLASSIFICATION OF SUBJECT MATTER**

*D04H 3/16*(2006.01)i; *A41D 13/11*(2006.01)i; *A62B 18/02*(2006.01)i; *B01D 39/16*(2006.01)i; *D04H 1/4374*(2012.01)i;
*D04H 1/4382*(2012.01)i; *D04H 1/498*(2012.01)i; *D04H 3/105*(2012.01)i; *D04H 3/11*(2012.01)i
FI:   D04H3/16; A41D13/11 Z; A62B18/02 C; B01D39/16 A; B01D39/16 E; D04H1/4374; D04H1/4382; D04H1/498;
        D04H3/105; D04H3/11

According to International Patent Classification (IPC) or to both national classification and IPC

**B. FIELDS SEARCHED**

Minimum documentation searched (classification system followed by classification symbols)

D04H1/00-18/04; A41D13/00-13/12; A62B7/00-33/00; B01D39/00-41/04

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2020/137605 A1 (KURARAY KURAFLEX CO LTD) 02 July 2020 (2020-07-02)<br>claims 1, 6-8, 10-12, 14-15, paragraphs [0013], [0056]-[0075] | 1-14 |
| A | JP 2008-184701 A (JAPAN VILENE CO LTD) 14 August 2008 (2008-08-14)<br>entire text | 1-14 |
| A | JP 2009-101254 A (JAPAN GORE TEX INC) 14 May 2009 (2009-05-14)<br>entire text | 1-14 |
| A | WO 2012/014501 A1 (MITSUI CHEMICALS, INC.) 02 February 2012 (2012-02-02)<br>entire text | 1-14 |
| A | JP 61-272063 A (TORAY IND INC) 02 December 1986 (1986-12-02)<br>entire text | 1-14 |
| A | JP 2019-126520 A (KAO CORP) 01 August 2019 (2019-08-01)<br>entire text | 1-14 |

☑ Further documents are listed in the continuation of Box C.     ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **12 August 2022** | **23 August 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

| International application No. |
| --- |
| **PCT/JP2022/025285** |

**C.    DOCUMENTS CONSIDERED TO BE RELEVANT**

| Category* | Citation of document, with indication, where appropriate, of the relevant passages | Relevant to claim No. |
| --- | --- | --- |
| A | JP 2001-279570 A (TOYO BOSEKI) 10 October 2001 (2001-10-10)<br>    entire text | 1-14 |
| A | JP 2018-178337 A (ASAHI KASEI CORP) 15 November 2018 (2018-11-15)<br>    entire text | 1-14 |

Form PCT/ISA/210 (second sheet) (January 2015)

**INTERNATIONAL SEARCH REPORT**
Information on patent family members

International application No.

**PCT/JP2022/025285**

| Patent document cited in search report | | | Publication date (day/month/year) | Patent family member(s) | | | Publication date (day/month/year) |
|---|---|---|---|---|---|---|---|
| WO | 2020/137605 | A1 | 02 July 2020 | US 2021/0310166 A1 claims 1, 6-8, 10-12, 124-15, paragraphs [0043], [0085]-[0106] CN 113260750 A KR 10-2021-0104765 A | | | |
| JP | 2008-184701 | A | 14 August 2008 | (Family: none) | | | |
| JP | 2009-101254 | A | 14 May 2009 | US 2010/0300295 A1 whole document WO 2009/051066 A1 EP 2213356 A1 KR 10-2010-0085983 A CN 101861196 A | | | |
| WO | 2012/014501 | A1 | 02 February 2012 | US 2013/0122771 A1 whole document EP 2599908 A1 CN 103038407 A KR 10-2013-0061713 A | | | |
| JP | 61-272063 | A | 02 December 1986 | (Family: none) | | | |
| JP | 2019-126520 | A | 01 August 2019 | (Family: none) | | | |
| JP | 2001-279570 | A | 10 October 2001 | (Family: none) | | | |
| JP | 2018-178337 | A | 15 November 2018 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021112950 A
- JP 2021112951 A
- WO 2020137605 A
- WO 2021010178 A